# EUROPEAN PATENT APPLICATION

(11) **EP 3 403 505 A1**
(43) Date of publication of application: **21.11.2018**
(21) Application number: 17171322.5
(22) Date of filing: 16.05.2017
(51) Int. Cl.: A01N 59/16, A01N 59/00, A01P 3/00

(54) **BIOCIDE FREE PRESERVATION**

(71) Applicant: Omya International AG, 4665 Oftringen (CH)
(72) Inventor: GLAUBITZ, Joachim, 6264 Pfaffnau (CH); SÜTTERLIN, Klaus, 79426 Buggingen (DE)
(74) Representative: Boos, Melanie

(57) **Abstract**

The invention relates to an antimicrobial composition comprising at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions, an aqueous preparation, a process for preserving an aqueous preparation against microorganisms as well as the use of the antimicrobial composition for preserving an aqueous preparation against microorganisms.

## Description

The invention relates to an antimicrobial composition comprising at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions, an aqueous preparation, a process for preserving an aqueous preparation against microorganisms as well as the use of the antimicrobial composition for preserving an aqueous preparation against microorganisms.

In practice, aqueous preparations and especially suspensions, emulsions, dispersions or slurries of water-insoluble solids such as minerals, fillers or pigments are used extensively in the paper, paint, rubber, and plastics industries as coatings, fillers, extenders and pigments for papermaking as well as aqueous lacquers and paints. For example, suspensions or slurries of calcium carbonate, talc or kaolin are used in the paper industry in large amounts as filler and/or as a component in the preparation of coated paper. Furthermore, such aqueous preparations are also used as additives in the concrete and agriculture industries. Typical aqueous preparations of water-insoluble solids are characterized in that they comprise water, a water-insoluble solid compound and optionally further additives, such as dispersing agents, in the form of a suspension, a slurry or dispersion with a water-insoluble solid content of 0.1 to 99.0 wt.-% based on the total weight of the preparation. A typical aqueous preparation is a White Mineral Dispersion (WMD) having a solids content of 45.0 to 78.0 wt.-%. Water-soluble polymers and copolymers which may be used as e.g. dispersant and/or grinding aid in such preparation are, for example, described in US 5,278,248.

The aforementioned aqueous preparations are often subject to contamination by microorganisms such as fungi, yeasts, molds, protozoa and/or aerobic and anaerobic bacteria resulting in changes in the preparation properties such as changes in viscosity and/or pH, discolorations or reductions in other quality parameters, which negatively affect their commercial value. Furthermore, such contamination by microorganisms is, depending on the species, a risk to humans, animals and/or crops. Therefore, the manufacturers of such aqueous preparations usually take measures for stabilising the suspensions, dispersions or slurries by using biocides (or antimicrobial agents). However, also such biocides may have risks for the environment and human or animal health in the quantities used.

In the art, several approaches for improving the microbiological quality of aqueous preparations have been proposed. For example, EP 1 139 741 describes aqueous suspensions or dispersions of minerals, fillers and/or pigments, containing a microbiocidal agent in the form of a solution and derivatives of phenol in partially neutralized form. US 5,496,398 relates to a process for the reduction of microorganisms in kaolin clay slurries by a combination of low temperature heat and reduced levels of a microbiocidal agent. US 2006/0111410 mentions a mixture comprising 1,2-benzisothiazolinone (BIT) and tetramethylol-acetylenediurea (TMAD) for protecting industrial materials and products against attack and destruction by microorganisms. Furthermore, it is suggested in the art to add formaldehyde-releasing substances to such aqueous preparations for improving the microbiological quality. For example, US 4,655,815 mentions an antimicrobial composition comprising a formaldehyde donor.

WO 2004/040979 A1 relates to synergic antimicrobial mixtures containing 1,2-benzisothiazolinone (BIT) and benzylhemiformal (BHF). The corresponding mixtures are used, for example, for slurries of pigments. EP 1 661 587 A1 relates to germicidal compositions including phthalaldehyde as an active ingredient. It is indicated in EP 1 661 587 A1 that halide ions, carbonate salts and bicarbonate salts may enhance the germicidal efficacy of phthalaldehyde against highly resistant *Bacillus subtilis* spores. US 2001/0009682 A1 relates to disinfectant concentrates having improved biocidal activity which may contain an aldehyde such as glutaraldehyde, a glycol and a lithium based buffer. It is described in US 2001/0009682 A1 that the buffer is required to control the pH of both the concentrate and its dilutions within the desired biocidal effective range. EP 2 199 348 A1 relates to a process for manufacturing aqueous mineral material suspensions or dried mineral materials using at least one lithium ion neutralised water-soluble organic polymer as well as the use of the lithium ion neutralised water-soluble organic polymer in the manufacturing process as a dispersing and/or grinding enhancer. EP 2 374 353 A1 refers to a process for preserving an aqueous preparation of mineral material like e.g. calcium carbonate preparations. EP 2 596 702 A1 refers to a process for stabilising an aqueous mineral preparation comprising a step of adding at least one aldehyde-containing and/or aldehyde-releasing and/or phenolic and/or isothiazoline biocide to said aqueous mineral preparation. US 4,871,754 refers to aqueous solutions which are protected from infestation by micro-organisms by use of a biocide which is an aqueous formulation of the lithium salt of 1,2-benzisothiazolin-3-one. EP 2 272 348 A1 refers to a biocidal agent (I) comprising 98 % of one or more halogen-free isothiazolinones, and 1-500 ppm by weight (w/w) of copper(II)-ions. It is further described that BIT may be provided in the form of its alkali metal salt. EP 1 843 794 A1 and US 2009/0120327 A1 refer to a process to control microbial contamination by the use of OH- ions at concentrations greater than 1x10⁻² mole/1. The invention further illustrates the ineffectiveness of microbial control at lower OH- concentration. Furthermore, the applicant is aware of EP 2 108 260 A2 referring to a process for bacterial stabilising aqueous preparations like e.g. calcium carbonate slurries and a composition which can be used for the biocidal treatment of such aqueous preparations. EP 2 108 260 A2 does not refer to a stabilisation using metal oxide such as magnesium oxide.

US 2004/0168614 A1 relates to a paint and/or a coating composition including anticorrosive pigment comprises a metal salt comprising a metal cation and an anion and a metal oxide or a metal hydroxide where the molar ratio of the total metal to the anion is in the range of 1:4 to 1:120. US 2005/0202102 A1 refers to a biocide composition comprising water-immiscible acidic oil, a magnesium salt and an amine as well as a method for the production of the biocide, comprising the steps of solubilizing the amine in the oil and then sufficiently admixing the magnesium salt, until an homogeneous suspension is obtained. WO 02/052941 A1 relates to a process for producing a biocide composition, comprising the steps of mixing a metal salt solution with at least one metal oxide in a molar ratio of between 4:1 and 1:2 oxide to salt and drying the resultant mixture thereby forming a cement powder. WO 2004/032624 A2 refers to area decontamination products and methods of use thereof which include reactive nanoparticles (e.g., metal oxides, hydroxides and mixtures thereof) with one or more biocides and a liquid carrier for the nanoparticles and biocide(s). The products may be formulated for area decontamination as sprays, fogs, aerosols, pastes, gels, wipes or foams, and the presence of reactive nanoparticles enhances the neutralization of undesirable chemical or biological compounds or agents. The nanoparticles may be from the group consisting of the alkali metal, alkaline earth metal, transition metal, actinide and lanthanide oxides and hydroxides and mixtures thereof. Nicole Jones et al., "Antibacterial activity of ZnO nanoparticle suspensions on a broad spectrum of microorganisms", FEMS Microbial Lett 279, 2008, 71-76 discloses that ZnO nanoparticles have a potential application as bacteriostatic agent in visible light and may have future application in the development of derivative agents to control the spread and infection of a variety of bacterial strains. Yao Kanga, "Controlled release of isothiazoline biocides from industrial minerals", thesis, School of Chemical Engineering, University of Birmingham, September 2010 discloses that various minerals such as kaolin, montmorillonite, calcium silicate, diatomaceous earth, amorphous silica and halloysite can be used to adsorb isothiazoline biocides for controlled-release and antimicrobial purposes. Unpublished European patent application EP 15 202 030.1 refers to a process for stabilising an aqueous preparation against microbial growth, the aqueous preparation stabilised against microbial growth as well as the use of a source of at least one metal oxide and/or its hydrated form for reducing the amount of an antimicrobial agent against at least one strain of bacteria and/or at least one strain of yeast and/or at least one strain of mould in an aqueous preparation, the use of a composition comprising at least one antimicrobial agent and a source of at least one metal oxide and/or its hydrated form as an antimicrobial composition in an aqueous preparation, the use of magnesium oxide, magnesium hydroxide, calcium oxide, calcium hydroxide, half burnt dolomite, burnt dolomite, beryllium oxide, beryllium hydroxide, strontium oxide, strontium hydroxide, barium oxide, barium hydroxide and mixtures thereof for increasing the pH of an aqueous preparation to a pH of above 8 and the use of an aqueous preparation stabilised against microbial growth in paper, plastics, polymer compositions, paint, coatings, concrete and/or agriculture applications. EP 2 929 781 A1 relates to a process for reducing the minimum inhibitory concentration (MIC) of a biocide against at least one strain of bacteria and/or at least one strain of yeast and/or at least one strain of mould in an aqueous preparation. EP 2 982 247 A1 relates to a process for preparing an antiseptic product, an antiseptic product obtainable by the process, an antiseptic inorganic powder composition, an antiseptic polymer product as well as the use of one or more source of lithium ions in combination with one or more source of sodium ions for the preparation of an antiseptic product being effective against microbial contamination.

However, the use of biocides in aqueous preparations is subject to continuously increasing limitations especially regarding their concentrations. However, at reduced biocide concentration the efficacy of the respective biocide against bacteria, fungi, yeasts, algae and/or moulds is usually not satisfactory anymore in comparison to the antimicrobial efficacy observed at a higher concentration of the same biocide and, thus, the obtained antimicrobial action at reduced biocide concentration is typically insufficient for stabilising an aqueous preparation against microbial growth.

Therefore, there is still a need in the art for antimicrobial compositions preserving aqueous preparations such as solutions, suspensions, dispersions and slurries against microorganisms but avoiding, or at least reducing, the use of conventional biocides such as phenols, halogenated phenols, halogen-containing compounds, halogen-releasing compounds, isothiazolinones, aldehyde-containing compounds, aldehyde-releasing compounds, guanidines, sulfones, thiocyanates, pyrithiones, antibiotics such as β-lactam antibiotics, quaternary ammonium salts, peroxides, perchlorates, amides, amines, heavy metals (other than zinc ions), biocidal enzymes, biocidal polypeptides, azoles, carbamates, glyphosates, sulphonamides and mixtures thereof.

Thus, it is an objective of the present invention to provide an antimicrobial composition. In particular, it is thus an objective of the present invention to provide an antimicrobial composition which preserves aqueous preparations such as solutions, suspensions, dispersions and slurries against microorganisms. It is still a further object of the present invention to provide an antimicrobial composition which avoids, or at least reduces, the use of conventional biocides such as phenols, halogenated phenols, halogen-containing compounds, halogen-releasing compounds, isothiazolinones, aldehyde-containing compounds, aldehyde-releasing compounds, guanidines, sulfones, thiocyanates, pyrithiones, antibiotics such as β-lactam antibiotics, quaternary ammonium salts, peroxides, perchlorates, amides, amines, heavy metals (other than zinc ions), biocidal enzymes, biocidal polypeptides, azoles, carbamates, glyphosates, sulphonamides and mixtures thereof.

These and other objectives of the present invention can be solved by an antimicrobial composition, a process and the uses as described in the present invention and defined in the claims.

According to one aspect of the present application an antimicrobial composition is provided. The antimicrobial composition comprises at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions.

According to one embodiment, the antimicrobial composition comprises water, preferably each of the at least one water soluble or water dispersable source of zinc ions and the at least one water soluble or water dispersable source of lithium ions and the optional at least one water soluble or water dispersable source of magnesium ions and/or the at least one water soluble or water dispersable source of sodium ions are present in the composition in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

According to another embodiment, the at least one water soluble or water dispersable source of lithium ions is at least one lithium salt, preferably the at least one lithium salt is selected from lithium carbonate, lithium chloride, lithium hydroxide, lithium phosphate, lithium citrate, lithium maleate, lithium acetate and lithium lactate; polymeric salts of lithium and mixtures thereof, said polymeric salt of lithium is preferably selected from lithium salts of acrylic homopolymers, acrylic copolymers such as copolymers of acrylic acid and maleic acid and/or acrylamide, polyphosphates and mixtures thereof, said polymeric salt of lithium is more preferably Li₂Na₂polyphosphate, lithium-sodium hexamethaphosphate or lithium polyacrylate.

According to yet another embodiment, the at least one water soluble or water dispersable source of magnesium ions is at least one magnesium salt, preferably the at least one magnesium salt is selected from magnesium carbonate, magnesium chloride, magnesium oxide, magnesium hydroxide, magnesium phosphate, magnesium citrate, magnesium maleate, magnesium acetate and magnesium lactate; polymeric salts of magnesium and mixtures thereof, said polymeric salt of magnesium is preferably selected from magnesium salts of acrylic homopolymers, acrylic copolymers such as copolymers of acrylic acid and maleic acid and/or acrylamide, polyphosphates and mixtures thereof.

According to one embodiment, the at least one water soluble or water dispersable source of zinc ions is at least one zinc salt, preferably the at least one zinc salt is selected from zinc carbonate, zinc oxide, zinc chloride, zinc hydroxide, zinc phosphate, zinc citrate, zinc maleate, zinc acetate and zinc lactate; polymeric salts of zinc and mixtures thereof, said polymeric salt of zinc is preferably selected from zinc salts of acrylic homopolymers, acrylic copolymers such as copolymers of acrylic acid and maleic acid and/or acrylamide, polyphosphates and mixtures thereof.

According to another embodiment, the at least one water soluble or water dispersable source of sodium ions is at least one sodium salt, preferably the at least one sodium salt is selected from sodium carbonate, sodium chloride, sodium hydroxide, sodium phosphate, sodium citrate, sodium maleate, sodium acetate and sodium lactate; polymeric salts of sodium and mixtures thereof, said polymeric salt of sodium is preferably selected from sodium salts of acrylic homopolymers, acrylic copolymers such as copolymers of acrylic acid and maleic acid and/or acrylamide, polyphosphates and mixtures thereof.

According to yet another embodiment, the weight ratio of the at least one water soluble or water dispersable source of zinc ions to the at least one water soluble or water dispersable source of lithium ions [Zn/Li] is from 100:1 to 1:100, preferably from 10:1 to 1:10 and most preferably from 3:1 to 1:3, and/or the weight ratio of the at least one water soluble or water dispersable source of magnesium ions to the at least one water soluble or water dispersable source of zinc ions [Mg/Zn] is from 100:1 to 1:100, preferably from 10:1 to 1:10 and most preferably from 3:1 to 1:3, and/or the weight ratio of the at least one water soluble or water dispersable source of magnesium ions to the at least one water soluble or water dispersable source of lithium ions [Mg/Li] is from 100:1 to 1:100, preferably from 10:1 to 1:10 and most preferably from 3:1 to 1:3, and/or the weight ratio of the at least one water soluble or water dispersable source of sodium ions to the at least one water soluble or water dispersable source of zinc ions [Na/Zn] is from 100:1 to 1:100, preferably from 10:1 to 1:10 and most preferably from 3:1 to 1:3, and/or the weight ratio of the at least one water soluble or water dispersable source of sodium ions to the at least one water soluble or water dispersable source of lithium ions [Na/Li] is from 100:1 to 1:100, preferably from 10:1 to 1:10 and most preferably from 3:1 to 1:3, and/or the weight ratio of the at least one water soluble or water dispersable source of sodium ions to the at least one water soluble or water dispersable source of magnesium ions [Na/Mg] is from 100:1 to 1:100, preferably from 10:1 to 1:10 and most preferably from 3:1 to 1:3.

According to one embodiment, the antimicrobial composition is effective against microorganisms, preferably microorganisms selected from the group comprising at least one strain of bacteria, at least one strain of fungi, mold, yeast, algae and mixtures thereof.

According to another embodiment, the at least one strain of bacteria is selected from the group comprising *Pseudomonas* sp., such as *Pseudomonas aeruginosa, Pseudomonas pseudoalcaligenes, Pseudomonas putida, Pseudomonas stutzeri, Pseudomonas mendocina, Pseudomonas oleovorans subsp. Oleovorans,* and mixtures thereof, *Burkholderia* sp., such as *Burkholderia cepacia; Escherichia* spp. such as *Escherichia coli; Alcaligenes* sp. such as *Alcaligenes faecalis; Staphylococcus* sp. such as *Staphylococcus aureus; Enterococcus* sp. such as *Enterococcus faecalis; Bacillus* sp. such as *Bacillus halodurans; Salmonella* sp.; *Legionella, Comomonas aquatica, Brevundimonas intermedia, Rhizobium radiobacter, Spingobium yanoikuyae, Caldimonas sp., Hydrogenophaga sp., Alishewanella agri, Arthrobacter sp., Chryseomicrobium amylolyticum, Microbacterium sp., Exiguobacterium aurantiacum,* and mixtures thereof and/or the at least one strain of fungi is selected from the group comprising *Saccharomyces cerevisiae, Pichia membranifaciens, Rhodotorula mucilaginosa Fusarium* sp., *Aspergillus* sp. such as *Aspergillus niger, Aspergillus brasiliensis,* and mixtures thereof, *Penicillium* sp. such as *Penicillium pinophilum, Penicillium funiculosum,* and mixtures thereof, *Aureobasidium pullulans*, *Geotrichum sp., Acremonium sp., Alternaria sp., Cladosporium sp., Mucor sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

According to yet another embodiment, the composition is free of a biocide selected from the group comprising phenols, halogenated phenols, halogen-containing compounds, halogen-releasing compounds, isothiazolinones, aldehyde-containing compounds, aldehyde-releasing compounds, guanidines, sulfones, thiocyanates, pyrithiones, antibiotics such as β-lactam antibiotics, quaternary ammonium salts, peroxides, perchlorates, amides, amines, heavy metals (other than zinc ions), biocidal enzymes, biocidal polypeptides, azoles, carbamates, glyphosates, sulphonamides and mixtures thereof, preferably the composition is free of biocides.

According to a further aspect of the present invention, an aqueous preparation, preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation, comprising the antimicrobial composition, as defined herein, is provided.

According to one embodiment of the inventive aqueous preparation, the aqueous preparation further comprises (i) at least one inorganic particulate material, preferably the at least one inorganic particulate material is selected from the group comprising natural ground calcium carbonate, natural and/or synthetic precipitated calcium carbonate, surface-modified calcium carbonate, dolomite, kaolin, clay, barrite, talcum, aluminium hydroxide, aluminium silicate, titanium dioxide, hydromagnesite, perlite, sepiolite, brucite and mixtures thereof, and most preferably the at least one inorganic particulate material comprises natural ground calcium carbonate and/or synthetic precipitated calcium carbonate, and/or (ii) at least one organic material, preferably the at least one organic material is selected from the group comprising carbohydrates such as starch, sugar, cellulose, modified cellulose and cellulose based pulp, glycerol, hydrocarbons and mixtures thereof.

According to another embodiment of the inventive aqueous preparation, the aqueous preparation has (i) a pH value of from 2 to 12, preferably from 6 to 12 and more preferably from 7 to 10.5, and/or (ii) a solids content of up to 85.0 wt.-%, preferably from 10.0 to 82.0 wt.-%, and more preferably from 20.0 to 80.0 wt.-%, based on the total weight of the aqueous preparation.

According to another aspect of the present invention, a process for preserving an aqueous preparation against microorganisms is provided. The process comprises the steps of
a) providing an aqueous preparation, preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation,
b) providing an antimicrobial composition, as defined herein, and
c) contacting and mixing the aqueous preparation of step a) one or more times with the antimicrobial composition of step b) for obtaining the preserved aqueous preparation.

According to a further aspect of the present invention, the use of an antimicrobial composition, as defined herein, for preserving an aqueous preparation against microorganisms is provided.

According to one embodiment of the inventive use, the microorganisms are selected from the group comprising at least one strain of bacteria, at least one strain of fungi, mold, yeast, algae and mixtures thereof.

According to another embodiment of the inventive use, the aqueous preparation is a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation.

Where the term "comprising" is used in the present description and claims, it does not exclude other elements. For the purposes of the present invention, the term "consisting of" is considered to be a preferred embodiment of the term "comprising of". If hereinafter a group is defined to comprise at least a certain number of embodiments, this is also to be understood to disclose a group, which preferably consists only of these embodiments.

Where an indefinite or definite article is used when referring to a singular noun, e.g. "a", "an" or "the", this includes a plural of that noun unless something else is specifically stated.

Terms like "obtainable" or "definable" and "obtained" or "defined" are used interchangeably. This e.g. means that, unless the context clearly dictates otherwise, the term "obtained" does not mean to indicate that, e.g. an embodiment must be obtained by e.g. the sequence of steps following the term "obtained" even though such a limited understanding is always included by the terms "obtained" or "defined" as a preferred embodiment.

When in the following reference is made to preferred embodiments or technical details of the inventive antimicrobial composition, it is to be understood that these preferred embodiments or technical details also refer to the inventive aqueous preparation, inventive process and the inventive uses as defined herein (as far as applicable).

As set out above, the inventive antimicrobial composition comprises at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions. In the following, it is referred to further details of the present invention and especially the foregoing components of the inventive antimicrobial composition. Those skilled in the art will understand that many embodiments described herein can be combined or applied together.

### The antimicrobial composition

An antimicrobial composition is provided, comprising at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions.

Thus, it is one requirement of the present invention that the antimicrobial composition comprises at least one water soluble or water dispersable source of zinc ions and at least one water soluble or water dispersable source of lithium ions.

In the meaning of the present invention, the term "antimicrobial composition" refers to a composition which is "effective" against microorganisms such as at least one strain of bacteria, at least one strain of fungi, mold, yeast, algae and mixtures thereof and thus has the ability to preserve an aqueous preparation, i.e. to prevent or reduce microbial growth of microorganisms such as at least one strain of bacteria, at least one strain of fungi, mold, yeast, algae and mixtures thereof.

According to the present invention, the wording "prevents microbial growth" means that no significant growth of microorganisms such as at least one strain of bacteria, at least one strain of fungi, mold, yeast, algae and mixtures thereof is observed in the aqueous preparation when the antimicrobial composition is present. This preferably does not lead to an increase of the cfu value in the treated aqueous preparation compared to the preparation immediately before treatment, more preferably to a decrease of the value to less than 100 cfu/1 ml or 1 g of the aqueous preparation and even more preferably to a decrease of the value to 80 to 100 1 ml or 1 g of the aqueous preparation using the bacterial count method described in the example section herein. It is appreciated that the final aqueous preparation, i.e. comprising the antimicrobial composition, is diluted by a factor of 100 and 100 µl of the diluted composition is then plated out in order to evaluate the microbial growth.

According to the present invention, the wording "reduce microbial growth" means that growth of microorganisms such as at least one strain of bacteria, at least one strain of fungi, mold, yeast, algae and mixtures thereof is slower in the aqueous preparation when the antimicrobial composition is present. This preferably leads to a lower cfu value in the treated aqueous preparation compared to the preparation without the antimicrobial composition before treatment, more preferably to a value of less than 100 cfu/1 ml or 1 g of the aqueous preparation and even more preferably to a decrease of the value to 80 to 100 1 ml or 1 g of the aqueous preparation using the bacterial count method described in the example section herein. It is appreciated that the final aqueous preparation, i.e. comprising the antimicrobial composition, is diluted by a factor of 100 and 100 µl of the diluted composition is then plated out in order to evaluate the microbial growth.

It is one requirement of the present invention that the antimicrobial composition comprises at least one water soluble or water dispersable source of zinc ions.

The term source of "at least one" water soluble or water dispersable source of zinc ions in the meaning of the present invention means that the source comprises, preferably consists of, one or more water soluble or water dispersable source(s) of zinc ions.

In one embodiment of the present invention, the water soluble or water dispersable source of zinc ions comprises, preferably consists of, one water soluble or water dispersable source of zinc ions. Alternatively, the water soluble or water dispersable source of zinc ions comprises, preferably consists of, two or more water soluble or water dispersable sources of zinc ions. For example, the water soluble or water dispersable source of zinc ions comprises, preferably consists of, two or three water soluble or water dispersable sources of zinc ions. Preferably, the water soluble or water dispersable source of zinc ions comprises, preferably consists of, two or more water soluble or water dispersable sources of zinc ions

It is appreciated that the at least one water soluble or water dispersable source of zinc ions of the instant antimicrobial composition can be any material comprising, preferably consisting of, zinc ions as cations.

It is appreciated that the at least one source of zinc ions is water soluble or water dispersable.

Accordingly, the term "water soluble" or "soluble in water" in the meaning of the present invention refers to systems in which the source of zinc ions forms a solution with water, i.e. the particles of the at least one source of zinc ions are dissolved in the solvent. Alternatively, the term "water dispersable" or "dispersable in water" in the meaning of the present invention refers to systems in which only a part of the source of zinc ions forms a solution with water, i.e. only a part of the particles of the at least one source of zinc ions are dissolved in the solvent.

The term "source" of zinc ions in the meaning of the present invention refers to a compound that comprises, preferably consists of, zinc ions, i.e. zinc cations.

In one embodiment of the present invention, the at least one water soluble or water dispersable source of zinc ions is preferably provided in the form of at least one zinc salt. Preferably the anionic group of the at least one zinc salt is selected from the group comprising carbonate, oxide, chloride, hydroxide, phosphate, citrate, maleate, acetate, lactate, sulphate, nitrate and mixtures thereof. In particular, the at least one lithium salt is selected from zinc carbonate, zinc oxide, zinc chloride, zinc hydroxide, zinc phosphate, zinc citrate, zinc maleate, zinc acetate and zinc lactate; polymeric salts of zinc and mixtures thereof.

For example, the at least one water soluble or water dispersable source of zinc ions is preferably zinc carbonate, zinc oxide or zinc hydroxide. Preferably, the at least one water soluble or water dispersable source of zinc ions is zinc oxide.

Additionally or alternatively, the at least one water soluble or water dispersable source of zinc ions is present as a polymeric salt of zinc, such as acrylic homopolymers, acrylic copolymers such as copolymers of acrylic acid and maleic acid and/or acrylamide, polyphosphates and mixtures thereof having multiple acidic sites which can be partially or totally neutralised with zinc ions. The polymeric salt of zinc is preferably zinc polyacrylate.

The polymeric salt of zinc is preferably partially or completely neutralized, preferably to a degree of 5.0 to 100.0 %, preferably to a degree of 25.0 to 100.0 % and most preferably to a degree of 75.0 to 100.0 % using a neutralizing agent containing ions of zinc and, optionally other alkali metals and/or alkaline earth metals. In one embodiment, the acidic sites of the polymeric salt of zinc are neutralized using a neutralizing agent containing only zinc. Neutralized polyacrylates and/or polymethacrylates with an average molecular weight of not more than 50 000, preferably with an average molecular weight in the range from 1 000 to 25 000 and more preferably in the range from 3 000 to 12 000 are especially suitable.

It is a further requirement that the antimicrobial composition comprises at least one water soluble or water dispersable source of lithium ions.

The term source of "at least one" water soluble or water dispersable source of lithium ions in the meaning of the present invention means that the source comprises, preferably consists of, one or more water soluble or water dispersable source(s) of lithium ions.

In one embodiment of the present invention, the water soluble or water dispersable source of lithium ions comprises, preferably consists of, one water soluble or water dispersable source of lithium ions. Alternatively, the water soluble or water dispersable source of lithium ions comprises, preferably consists of, two or more water soluble or water dispersable sources of lithium ions. For example, the water soluble or water dispersable source of lithium ions comprises, preferably consists of, two or three water soluble or water dispersable sources of lithium ions. Preferably, the water soluble or water dispersable source of lithium ions comprises, preferably consists of, two or more water soluble or water dispersable sources of lithium ions

It is appreciated that the at least one water soluble or water dispersable source of lithium ions of the instant antimicrobial composition can be any material comprising, preferably consisting of, lithium ions as cations.

It is appreciated that the at least one source of lithium ions is water soluble or water dispersable.

Accordingly, the term "water soluble" or "soluble in water" in the meaning of the present invention refers to systems in which the source of lithium ions forms a solution with water, i.e. the particles of the at least one source of lithium ions are dissolved in the solvent. Alternatively, the term "water dispersable" or "dispersable in water" in the meaning of the present invention refers to systems in which only a part of the source of lithium ions forms a solution with water, i.e. only a part of the particles of the at least one source of lithium ions are dissolved in the solvent.

The term "source" of lithium ions in the meaning of the present invention refers to a compound that comprises, preferably consists of, lithium ions, i.e. lithium cations.

In one embodiment of the present invention, the at least one water soluble or water dispersable source of lithium ions is preferably provided in the form of at least one lithium salt. Preferably the anionic group of the at least one lithium salt is selected from the group comprising carbonate, chloride, hydroxide, phosphate, citrate, maleate, acetate, lactate and mixtures thereof. In particular, the at least one lithium salt is selected from lithium carbonate, lithium chloride, lithium hydroxide, lithium phosphate, lithium citrate, lithium maleate, lithium acetate and lithium lactate, polymeric salts of lithium and mixtures thereof.

For example, the at least one water soluble or water dispersable source of lithium ions is preferably lithium carbonate (CAS NO. 554-13-2), lithium citrate (CAS NO. 919-16-4) or lithium hydroxide (CAS NO. 1310-65-2). Preferably, the at least one water soluble or water dispersable source of lithium ions is lithium carbonate.

Additionally or alternatively, the at least one water soluble or water dispersable source of lithium ions is present as a polymeric salt of lithium, such as acrylic homopolymers, acrylic copolymers such as copolymers of acrylic acid and maleic acid and/or acrylamide, polyphosphates and mixtures thereof having multiple acidic sites which can be partially or totally neutralised with lithium ions. The polymeric salt of lithium is preferably selected from Li₂Na₂polyphosphate, lithium-sodium hexamethaphosphate or lithium polyacrylate.

The polymeric salt of lithium is preferably partially or completely neutralized, preferably to a degree of 5.0 to 100.0 %, preferably to a degree of 25.0 to 100.0 % and most preferably to a degree of 75.0 to 100.0 % using a neutralizing agent containing ions of lithium and, optionally other alkali metals and/or alkaline earth metals. In one embodiment, the acidic sites of the polymeric salt of lithium are neutralized using a neutralizing agent containing only lithium. Neutralized polyacrylates and/or polymethacrylates with an average molecular weight of not more than 50 000, preferably with an average molecular weight in the range from 1 000 to 25 000 and more preferably in the range from 3 000 to 12 000 are especially suitable.

It is appreciated that the antimicrobial composition can further comprise at least one water soluble or water dispersable source of magnesium ions and/or at least one water soluble or water dispersable source of sodium ions. This embodiment, is advantageous in order to further improve the antimicrobial efficiency of the antimicrobial composition.

Thus, it is preferred that the present antimicrobial composition comprises the at least one water soluble or water dispersable source of zinc ions in combination with the at least one water soluble or water dispersable source of lithium ions and at least one water soluble or water dispersable source of magnesium ions and/or at least one water soluble or water dispersable source of sodium ions.

In one embodiment, the antimicrobial composition thus comprises the at least one water soluble or water dispersable source of zinc ions in combination with the at least one water soluble or water dispersable source of lithium ions and at least one water soluble or water dispersable source of magnesium ions or at least one water soluble or water dispersable source of sodium ions. For example, the antimicrobial composition comprises the at least one water soluble or water dispersable source of zinc ions in combination with the at least one water soluble or water dispersable source of lithium ions and at least one water soluble or water dispersable source of magnesium ions. Alternatively, the antimicrobial composition comprises the at least one water soluble or water dispersable source of zinc ions in combination with the at least one water soluble or water dispersable source of lithium ions and at least one water soluble or water dispersable source of sodium ions.

In an alternative embodiment, the antimicrobial composition comprises the at least one water soluble or water dispersable source of zinc ions in combination with the at least one water soluble or water dispersable source of lithium ions and at least one water soluble or water dispersable source of magnesium ions and at least one water soluble or water dispersable source of sodium ions.

The term source of "at least one" water soluble or water dispersable source of magnesium ions in the meaning of the present invention means that the source comprises, preferably consists of, one or more water soluble or water dispersable source(s) of magnesium ions.

In one embodiment of the present invention, the water soluble or water dispersable source of magnesium ions comprises, preferably consists of, one water soluble or water dispersable source of magnesium ions. Alternatively, the water soluble or water dispersable source of magnesium ions comprises, preferably consists of, two or more water soluble or water dispersable sources of magnesium ions. For example, the water soluble or water dispersable source of magnesium ions comprises, preferably consists of, two or three water soluble or water dispersable sources of magnesium ions. Preferably, the water soluble or water dispersable source of magnesium ions comprises, preferably consists of, two or more water soluble or water dispersable sources of magnesium ions.

It is appreciated that the at least one water soluble or water dispersable source of magnesium ions of the instant antimicrobial composition can be any material comprising, preferably consisting of, magnesium ions as cations.

It is appreciated that the at least one source of magnesium ions is water soluble or water dispersable.

Accordingly, the term "water soluble" or "soluble in water" in the meaning of the present invention refers to systems in which the source of magnesium ions forms a solution with water, i.e. the particles of the at least one source of magnesium ions are dissolved in the solvent. Alternatively, the term "water dispersable" or "dispersable in water" in the meaning of the present invention refers to systems in which only a part of the source of magnesium ions forms a solution with water, i.e. only a part of the particles of the at least one source of magnesium ions are dissolved in the solvent.

The term "source" of magnesium ions in the meaning of the present invention refers to a compound that comprises, preferably consists of, magnesium ions, i.e. magnesium cations.

In one embodiment of the present invention, the at least one water soluble or water dispersable source of magnesium ions is preferably provided in the form of at least one magnesium salt. Preferably the anionic group of the at least one magnesium salt is selected from the group comprising carbonate, chloride, oxide, hydroxide, phosphate, citrate, maleate, acetate, lactate and mixtures thereof. In particular, the at least one magnesium salt is selected from magnesium carbonate, magnesium chloride, magnesium oxide, magnesium hydroxide, magnesium phosphate, magnesium citrate, magnesium maleate, magnesium acetate and magnesium lactate; polymeric salts of magnesium and mixtures thereof.

For example, the at least one water soluble or water dispersable source of magnesium ions is preferably magnesium carbonate.

Additionally or alternatively, the at least one water soluble or water dispersable source of magnesium ions is present as a polymeric salt of magnesium, such as acrylic homopolymers, acrylic copolymers such as copolymers of acrylic acid and maleic acid and/or acrylamide, polyphosphates and mixtures thereof having multiple acidic sites which can be partially or totally neutralised with magnesium ions. The polymeric salt of magnesium is preferably magnesium polyacrylate.

The polymeric salt of magnesium is preferably partially or completely neutralized, preferably to a degree of 5.0 to 100.0 %, preferably to a degree of 25.0 to 100.0 % and most preferably to a degree of 75.0 to 100.0 % using a neutralizing agent containing ions of magnesium and, optionally other alkali metals and/or alkaline earth metals. In one embodiment, the acidic sites of the polymeric salt of magnesium are neutralized using a neutralizing agent containing only magnesium. Neutralized polyacrylates and/or polymethacrylates with an average molecular weight of not more than 50 000, preferably with an average molecular weight in the range from 1 000 to 25 000 and more preferably in the range from 3 000 to 12 000 are especially suitable.

The term source of "at least one" water soluble or water dispersable source of sodium ions in the meaning of the present invention means that the source comprises, preferably consists of, one or more water soluble or water dispersable source(s) of sodium ions.

In one embodiment of the present invention, the water soluble or water dispersable source of sodium ions comprises, preferably consists of, one water soluble or water dispersable source of sodium ions. Alternatively, the water soluble or water dispersable source of sodium ions comprises, preferably consists of, two or more water soluble or water dispersable sources of sodium ions. For example, the water soluble or water dispersable source of sodium ions comprises, preferably consists of, two or three water soluble or water dispersable sources of sodium ions. Preferably, the water soluble or water dispersable source of sodium ions comprises, preferably consists of, two or more water soluble or water dispersable sources of sodium ions

It is appreciated that the at least one water soluble or water dispersable source of sodium ions of the instant antimicrobial composition can be any material comprising, preferably consisting of, sodium ions as cations.

It is appreciated that the at least one source of sodium ions is water soluble or water dispersable.

Accordingly, the term "water soluble" or "soluble in water" in the meaning of the present invention refers to systems in which the source of sodium ions forms a solution with water, i.e. the particles of the at least one source of sodium ions are dissolved in the solvent. Alternatively, the term "water dispersable" or "dispersable in water" in the meaning of the present invention refers to systems in which only a part of the source of sodium ions forms a solution with water, i.e. only a part of the particles of the at least one source of sodium ions are dissolved in the solvent.

The term "source" of sodium ions in the meaning of the present invention refers to a compound that comprises, preferably consists of, sodium ions, i.e. sodium cations.

In one embodiment of the present invention, the at least one water soluble or water dispersable source of sodium ions is preferably provided in the form of at least one sodium salt. Preferably the anionic group of the at least one sodium salt is selected from the group comprising carbonate, chloride, hydroxide, phosphate, citrate, maleate, acetate, lactate and mixtures thereof. In particular, the at least one magnesium salt is selected from sodium carbonate, sodium chloride, sodium hydroxide, sodium phosphate, sodium citrate, sodium maleate, sodium acetate and sodium lactate; polymeric salts of sodium and mixtures thereof.

For example, the at least one water soluble or water dispersable source of sodium ions is preferably sodium carbonate.

Additionally or alternatively, the at least one water soluble or water dispersable source of sodium ions is present as a polymeric salt of sodium, such as acrylic homopolymers, acrylic copolymers such as copolymers of acrylic acid and maleic acid and/or acrylamide, polyphosphates and mixtures thereof having multiple acidic sites which can be partially or totally neutralised with sodium ions. The polymeric salt of sodium is preferably selected from Li₂Na₂polyphosphate, lithium-sodium hexamethaphosphate or sodium polyacrylate.

The polymeric salt of sodium is preferably partially or completely neutralized, preferably to a degree of 5.0 to 100.0 %, preferably to a degree of 25.0 to 100.0 % and most preferably to a degree of 75.0 to 100.0 % using a neutralizing agent containing ions of sodium and, optionally other alkali metals and/or alkaline earth metals. In one embodiment, the acidic sites of the polymeric salt of sodium are neutralized using a neutralizing agent containing only sodium. Neutralized polyacrylates and/or polymethacrylates with an average molecular weight of not more than 50 000, preferably with an average molecular weight in the range from 1 000 to 25 000 and more preferably in the range from 3 000 to 12 000 are especially suitable.

The antimicrobial composition comprises the at least one water soluble or water dispersable source of zinc ions and the at least one water soluble or water dispersable source of lithium ions preferably in a weight ratio [Zn/Li] is from 100:1 to 1:100, more preferably from 10:1 to 1:10 and most preferably from 3:1 to 1:3.

If the antimicrobial composition further comprises at least one water soluble or water dispersable source of magnesium ions, the weight ratio of the at least one water soluble or water dispersable source of magnesium ions to the at least one water soluble or water dispersable source of zinc ions [Mg/Zn] is preferably from 100:1 to 1:100, more preferably from 10:1 to 1:10 and most preferably from 3:1 to 1:3.

Additionally or alternatively, the weight ratio of the at least one water soluble or water dispersable source of magnesium ions to the at least one water soluble or water dispersable source of lithium ions [Mg/Li] is preferably from 100:1 to 1:100, more preferably from 10:1 to 1:10 and most preferably from 3:1 to 1:3.

If the antimicrobial composition further comprises at least one water soluble or water dispersable source of sodium ions, the weight ratio of the at least one water soluble or water dispersable source of sodium ions to the at least one water soluble or water dispersable source of zinc ions [Na/Zn] is preferably from 100:1 to 1:100, more preferably from 10:1 to 1:10 and most preferably from 3:1 to 1:3.

Additionally or alternatively, the weight ratio of the at least one water soluble or water dispersable source of sodium ions to the at least one water soluble or water dispersable source of lithium ions [Na/Li] is preferably from 100:1 to 1:100, more preferably from 10:1 to 1:10 and most preferably from 3:1 to 1:3.

Thus, if the antimicrobial composition comprises at least one water soluble or water dispersable source of zinc ions in combination with at least one water soluble or water dispersable source of lithium ions and at least one water soluble or water dispersable source of magnesium ions, the weight ratio of the at least one water soluble or water dispersable source of zinc ions to the at least one water soluble or water dispersable source of lithium ions [Zn/Li] is preferably from 100:1 to 1:100, more preferably from 10:1 to 1:10 and most preferably from 3:1 to 1:3 and the weight ratio of the at least one water soluble or water dispersable source of magnesium ions to the at least one water soluble or water dispersable source of zinc ions [Mg/Zn] is from 100:1 to 1:100, preferably from 10:1 to 1:10 and most preferably from 3:1 to 1:3 and the weight ratio of the at least one water soluble or water dispersable source of magnesium ions to the at least one water soluble or water dispersable source of lithium ions [Mg/Li] is from 100:1 to 1:100, preferably from 10:1 to 1:10 and most preferably from 3:1 to 1:3.

Alternatively, if the antimicrobial composition comprises at least one water soluble or water dispersable source of zinc ions in combination with at least one water soluble or water dispersable source of lithium ions and at least one water soluble or water dispersable source of sodium ions, the weight ratio of the at least one water soluble or water dispersable source of zinc ions to the at least one water soluble or water dispersable source of lithium ions [Zn/Li] is preferably from 100:1 to 1:100, more preferably from 10:1 to 1:10 and most preferably from 3:1 to 1:3 and the weight ratio of the at least one water soluble or water dispersable source of sodium ions to the at least one water soluble or water dispersable source of zinc ions [Na/Zn] is from 100:1 to 1:100, preferably from 10:1 to 1:10 and most preferably from 3:1 to 1:3 and the weight ratio of the at least one water soluble or water dispersable source of sodium ions to the at least one water soluble or water dispersable source of lithium ions [Na/Li] is from 100:1 to 1:100, preferably from 10:1 to 1:10 and most preferably from 3:1 to 1:3.

In one embodiment, the antimicrobial composition further comprises at least one water soluble or water dispersable source of magnesium ions and at least one water soluble or water dispersable source of sodium ions. In this embodiment, the weight ratio of the at least one water soluble or water dispersable source of sodium ions to the at least one water soluble or water dispersable source of magnesium ions [Na/Mg] is from 100:1 to 1:100, preferably from 10:1 to 1:10 and most preferably from 3:1 to 1:3.

If the antimicrobial composition comprises at least one water soluble or water dispersable source of zinc ions in combination with at least one water soluble or water dispersable source of lithium ions and at least one water soluble or water dispersable source of magnesium ions and at least one water soluble or water dispersable source of sodium ions, the weight ratio of the at least one water soluble or water dispersable source of zinc ions to the at least one water soluble or water dispersable source of lithium ions [Zn/Li] is preferably from 100:1 to 1:100, more preferably from 10:1 to 1:10 and most preferably from 3:1 to 1:3, and the weight ratio of the at least one water soluble or water dispersable source of magnesium ions to the at least one water soluble or water dispersable source of zinc ions [Mg/Zn] is from 100:1 to 1:100, preferably from 10:1 to 1:10 and most preferably from 3:1 to 1:3, and the weight ratio of the at least one water soluble or water dispersable source of magnesium ions to the at least one water soluble or water dispersable source of lithium ions [Mg/Li] is from 100:1 to 1:100, preferably from 10:1 to 1:10 and most preferably from 3:1 to 1:3, and the weight ratio of the at least one water soluble or water dispersable source of sodium ions to the at least one water soluble or water dispersable source of zinc ions [Na/Zn] is from 100:1 to 1:100, preferably from 10:1 to 1:10 and most preferably from 3:1 to 1:3, and the weight ratio of the at least one water soluble or water dispersable source of sodium ions to the at least one water soluble or water dispersable source of lithium ions [Na/Li] is from 100:1 to 1:100, preferably from 10:1 to 1:10 and most preferably from 3:1 to 1:3, and the weight ratio of the at least one water soluble or water dispersable source of sodium ions to the at least one water soluble or water dispersable source of magnesium ions [Na/Mg] is from 100:1 to 1:100, preferably from 10:1 to 1:10 and most preferably from 3:1 to 1:3.

Preferably, the antimicrobial composition is added to an aqueous preparation such as a paper making formulation, paper coating formulation, fibre formulation, food formulation, pharmaceutical formulation, cosmetic formulation, plastic formulation, adhesive formulation, metal working fluid, cooling fluid, primer coat, levelling compound, and/or a paint formulation, in order to preserve the aqueous preparation. As the antimicrobial composition can be more evenly distributed in the aqueous preparation if it is added in form of a solution or dispersion, it is preferred that the antimicrobial composition comprises water. Thus, the antimicrobial composition is preferably an aqueous antimicrobial composition.

The term "aqueous" preparation or antimicrobial composition refers to a system, wherein the liquid phase of the preparation or composition comprises, preferably consists of, water. However, said term does not exclude that the aqueous preparation or composition comprises an organic solvent selected from the group comprising alcohols such as methanol, ethanol, isopropanol, carbonyl-group containing solvents such as ketones, e.g. acetone or aldehydes, esters such as isopropyl acetate, carboxylic acids such as formic acid, sulphoxides such as dimethyl sulphoxide and mixtures thereof. If the aqueous preparation or composition comprises an organic solvent, the aqueous preparation or composition comprises the organic solvent in an amount up to 40.0 wt.-% preferably from 1.0 to 30.0 wt.-% and most preferably from 1.0 to 25.0 wt.-%, based on the total weight of the liquid phase of the aqueous preparation or composition. For example, the liquid phase of the aqueous preparation or composition consists of water. If the liquid phase of the aqueous preparation or composition consists of water, the water to be used can be any water available such as tap water and/or deionised water.

The term "solution" in the meaning of the present invention refers to an antimicrobial composition in which no discrete solid particles are observed in the solvent, i.e. a solution with water is formed, wherein the at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions are dissolved in the solvent.

The term "dispersion" or "suspension" in the meaning of the present invention refers to an antimicrobial composition, wherein at least a part of the at least one water soluble or water dispersable source of zinc ions in combination with at least one water soluble or water dispersable source of lithium ions and/or at least one water soluble or water dispersable source of magnesium ions and/or at least one water soluble or water dispersable source of sodium ions are present as insoluble solids in the solvent.

In view of this, the antimicrobial composition can be in an undiluted, i.e. concentrated form. In another embodiment of the present invention, the antimicrobial composition is diluted to a suitable concentration before being contacted with the aqueous preparation. In the diluted form, the antimicrobial composition is preferably dissolved in water, wherein the corresponding diluted composition comprises preferably up to 99.0 wt.-% of the antimicrobial composition, based on the total weight of the composition. More preferably, the composition in water comprises 1.0 to 95.0 wt.-% of the antimicrobial composition and most preferably 1.0 to 85.0 wt.-% of the antimicrobial composition, based on the total weight of the composition, whereby the composition may further comprise suitable stabilisers.

As already outlined above, it is preferred that the antimicrobial composition is evenly distributed in the aqueous preparation. In this embodiment, the antimicrobial composition is thus preferably added in form of a solution or dispersion and thus is preferably diluted with water. However, in order to avoid an excessive dilution of the aqueous preparation, it is preferred to keep the water content in the antimicrobial composition as low as possible or as low as necessary.

It is appreciated that each of the at least one water soluble or water dispersable source of zinc ions and the at least one water soluble or water dispersable source of lithium ions and the optional at least one water soluble or water dispersable source of magnesium ions and/or the at least one water soluble or water dispersable source of sodium ions is present in the composition in an amount of at least 100 ppm, calculated relative to the weight of water.

In one embodiment, each of the at least one water soluble or water dispersable source of zinc ions and the at least one water soluble or water dispersable source of lithium ions and the optional at least one water soluble or water dispersable source of magnesium ions and/or the at least one water soluble or water dispersable source of sodium ions is present in the composition in an amount from 100 to 27 000 ppm, preferably from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

That is to say, the antimicrobial composition preferably comprises
a) at least one water soluble or water dispersable source of zinc ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, in combination with
b) at least one water soluble or water dispersable source of lithium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

In one embodiment, the antimicrobial composition preferably comprises
a) at least one water soluble or water dispersable source of zinc ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, in combination with
b) at least one water soluble or water dispersable source of lithium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, and
c) at least one water soluble or water dispersable source of magnesium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, and/or
d) at least one water soluble or water dispersable source of sodium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

For example, the antimicrobial composition preferably comprises
a) at least one water soluble or water dispersable source of zinc ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, in combination with
b) at least one water soluble or water dispersable source of lithium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, and
c) at least one water soluble or water dispersable source of magnesium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, or
d) at least one water soluble or water dispersable source of sodium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

Alternatively, the antimicrobial composition preferably comprises
a) at least one water soluble or water dispersable source of zinc ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, in combination with
b) at least one water soluble or water dispersable source of lithium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, and
c) at least one water soluble or water dispersable source of magnesium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water, and
d) at least one water soluble or water dispersable source of sodium ions in an amount of at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

It is appreciated that, if it is not indicated otherwise, the term "ppm" is calculated relative to the weight of water.

In one preferred embodiment, the antimicrobial composition comprises, more preferably consists of, the at least one water soluble or water dispersable source of zinc ions in an amount from 100 to 5 000 ppm in combination with at least one water soluble or water dispersable source of lithium ions in an amount from 100 to 5 000 ppm. For example, the antimicrobial composition comprises, more preferably consists of, the at least one water soluble or water dispersable source of zinc ions in an amount from 100 to 2 500 ppm in combination with at least one water soluble or water dispersable source of lithium ions in an amount from 100 to 2 500 ppm.

In another preferred embodiment, the antimicrobial composition comprises the at least one water soluble or water dispersable source of zinc ions in an amount from 100 to 1 500 ppm in combination with at least one water soluble or water dispersable source of lithium ions in an amount from 100 to 1 500 ppm and at least one water soluble or water dispersable source of sodium ions in an amount from 100 to 1 500 ppm. For example, the antimicrobial composition comprises the at least one water soluble or water dispersable source of zinc ions in an amount from 250 to 1 250 ppm in combination with at least one water soluble or water dispersable source of lithium ions in an amount from 100 to 1 250 ppm and at least one water soluble or water dispersable source of sodium ions in an amount from 100 to 1 250 ppm.

In another preferred embodiment, the antimicrobial composition comprises the at least one water soluble or water dispersable source of zinc ions in an amount from 100 to 1 500 ppm in combination with at least one water soluble or water dispersable source of lithium ions in an amount from 100 to 1 500 ppm and at least one water soluble or water dispersable source of magnesium ions in an amount from 100 to 1 500 ppm. For example, the antimicrobial composition comprises the at least one water soluble or water dispersable source of zinc ions in an amount from 250 to 1 250 ppm in combination with at least one water soluble or water dispersable source of lithium ions in an amount from 100 to 1 250 ppm and at least one water soluble or water dispersable source of magnesium ions in an amount from 100 to 1 250 ppm.

It is appreciated that the amount of each of the at least one water soluble or water dispersable source of zinc ions and the at least one water soluble or water dispersable source of lithium ions and the optional at least one water soluble or water dispersable source of magnesium ions and/or the at least one water soluble or water dispersable source of sodium ions can vary in a great range in the aqueous preparation. However, exceptional good results with regard to the antimicrobial efficiency are obtained if the at least one water soluble or water dispersable source of zinc ions and the at least one water soluble or water dispersable source of lithium ions are present in a total amount of at least 200 ppm, calculated relative to the weight of water of the aqueous preparation.

For example, the composition comprises the at least one water soluble or water dispersable source of zinc ions and the at least one water soluble or water dispersable source of lithium ions in a total amount ranging from 200 to 54 000 ppm, more preferably from 500 to 50 000 ppm, more preferably from 500 to 25 000 ppm, even more preferably from 750 to 10 000 ppm and most preferably from 900 to 5 000 ppm, calculated relative to the weight of water.

If the composition comprises the at least one water soluble or water dispersable source of zinc ions and the at least one water soluble or water dispersable source of lithium ions and the at least one water soluble or water dispersable source of magnesium ions and/or the at least one water soluble or water dispersable source of sodium ions, the total amount of the at least one water soluble or water dispersable source of zinc ions and the at least one water soluble or water dispersable source of lithium ions and the at least one water soluble or water dispersable source of magnesium ions and/or the at least one water soluble or water dispersable source of sodium ions in the composition preferably ranges from 500 to 54 000 ppm, more preferably from 750 to 50 000 ppm, more preferably from 1 000 to 25 000 ppm, even more preferably from 1 200 to 10 000 ppm and most preferably from 1 500 to 5 000 ppm, calculated relative to the weight of water.

Thus, the antimicrobial composition comprises, preferably consists of,
a) at least one water soluble or water dispersable source of zinc ions in combination with
b) at least one water soluble or water dispersable source of lithium ions,
c) optionally at least one water soluble or water dispersable source of magnesium ions, and/or
d) optionally at least one water soluble or water dispersable source of sodium ions, and
e) optionally water.

As already outlined above, it has been found that the present antimicrobial composition is effective against microorganisms. Preferably, the antimicrobial composition is effective against microorganisms selected from the group comprising at least one strain of bacteria, at least one strain of fungi, mold, yeast, algae and mixtures thereof.

In one embodiment of the present invention, the at least one strain of bacteria is selected from the group consisting of gram-negative bacteria, gram-positive bacteria and mixtures thereof.

It is appreciated that gram-positive and gram-negative bacteria are well known in the art and are e.g. described in Biology of Microorganisms, "Brock", Madigan MT, Martinko JM, Parker J, 1997, 8th Edition. In particular, such bacteria represent evolutionary very distantly related classes of bacteria each comprising of many bacterial families. Gram negative bacteria are characterized by two membranes (outer and inner membrane) while gram positive bacteria contain only one membrane. Usually, the former contains a high amount of lipopolysaccharide and a thin single-layer of peptidoglycan, while the latter has virtually no lipopolysaccharide, a multi-layered thick peptidoglycan and the coat contains teichoic acids. For these differences, the Gram positive and Gram negative bacteria react differently on environmental influences. Methods for discriminating gram-positive and gram-negative bacteria include species identification by DNA sequencing techniques or biochemical characterisations. Alternatively, the number of membranes can be determined directly by thin section transmission electron microscopy.

The term "at least one strain of bacteria" in the meaning of the present invention means that the strain of bacteria comprises, preferably consists of, one or more strains of bacteria.

In one embodiment of the present invention, the at least one strain of bacteria comprises, preferably consists of, one strain of bacteria. Alternatively, the at least one strain of bacteria comprises, preferably consists of, two or more strains of bacteria. For example, the at least one strains of bacteria comprises, preferably consists of, two or three strains of bacteria. Preferably, the at least one strain of bacteria comprises, preferably consists of, two or more strains of bacteria.

In one embodiment, the antimicrobial composition is effective against at least one strain of bacteria which is selected from the group comprising *Pseudomonas* sp., such as *Pseudomonas aeruginosa, Pseudomonas pseudoalcaligenes, Pseudomonas putida, Pseudomonas stutzeri, Pseudomonas mendocina, Pseudomonas oleovorans subsp. Oleovorans,* and mixtures thereof, *Burkholderia* sp., such as *Burkholderia cepacia; Escherichia* spp. such as *Escherichia coli; Alcaligenes* sp. such as *Alcaligenes faecalis; Staphylococcus* sp. such as *Staphylococcus aureus; Enterococcus* sp. such as *Enterococcus faecalis; Bacillus* sp. such as *Bacillus halodurans; Salmonella* sp.; *Legionella, Comomonas aquatica, Brevundimonas intermedia, Rhizobium radiobacter, Spingobium yanoikuyae, Caldimonas sp., Hydrogenophaga sp., Alishewanella agri, Arthrobacter sp., Chryseomicrobium amylolyticum, Microbacterium sp., Exiguobacterium aurantiacum,* and mixtures thereof.

For example, the antimicrobial composition is effective against at least one strain of bacteria which is selected from the group comprising *Pseudomonas* sp., such as *Pseudomonas aeruginosa, Pseudomonas pseudoalcaligenes, Pseudomonas putida,* and mixtures thereof, *Burkholderia* sp., such as *Burkholderia cepacia; Escherichia* spp. such as *Escherichia coli; Alcaligenes* sp. such as *Alcaligenes faecalis; Staphylococcus* sp. such as *Staphylococcus aureus; Enterococcus* sp. such as *Enterococcus faecalis; Bacillus* sp.; *Salmonella* sp.; *Legionella,* and mixtures thereof.

Additionally or alternatively, the antimicrobial composition is effective against at least one strain of fungi which is selected from the group comprising *Saccharomyces cerevisiae, Pichia membranifaciens, Rhodotorula mucilaginosa Fusarium* sp., *Aspergillus* sp. such as *Aspergillus niger, Aspergillus brasiliensis,* and mixtures thereof, *Penicillium* sp. such as *Penicillium pinophilum, Penicillium funiculosum,* and mixtures thereof, *Aureobasidium pullulans, Geotrichum sp., Acremonium sp., Alternaria sp., Cladosporium sp., Mucor sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

For example, the antimicrobial composition is effective against at least one strain of fungi which is selected from the group comprising *Saccharomyces cerevisiae, Pichia membranifaciens, Rhodotorula mucilaginosa Fusarium* sp., *Aspergillus* sp., and mixtures thereof.

It is appreciated that moulds and yeasts are subclasses of fungis. Accordingly, the at least one strain of fungi can be at least one strain of mould or at least one strain of yeast.

Thus, the antimicrobial composition can be effective against at least one strain of mould which is selected from the group comprising *Acremonium sp., Alternaria sp., Aspergillus sp., Cladosporium sp., Fusarium sp., Mucor sp., Penicillium sp., Rhizopus sp., Stachybotrys sp., Trichoderma sp., Dematiaceae sp., Phoma sp., Eurotium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

The term "at least one strain of mould" in the meaning of the present invention means that the strain of mould comprises, preferably consists of, one or more strains of mould.

In one embodiment of the present invention, the at least one strain of mould comprises, preferably consists of, one strain of mould. Alternatively, the at least one strain of mould comprises, preferably consists of, two or more strains of mould. For example, the at least one strain of mould comprises, preferably consists of, two or three strains of mould. Preferably, the at least one strain of mould comprises, preferably consists of, two or more strains of mould.

Additionally or alternatively, the antimicrobial composition can be effective against at least one strain of yeast which is selected from the group comprising *Saccharomyces cerevisiae, Pichia membranifaciens, Rhodotorula mucilaginosa*, and mixtures thereof.

The term "at least one strain of yeast" in the meaning of the present invention means that the strain of yeast comprises, preferably consists of, one or more strains of yeast.

In one embodiment of the present invention, the at least one strain of yeast comprises, preferably consists of, one strain of yeast. Alternatively, the at least one strain of yeast comprises, preferably consists of, two or more strains of yeast. For example, the at least one strain of yeast comprises, preferably consists of, two or three strains of yeast. Preferably, the at least one strain of yeast comprises, preferably consists of, two or more strains of yeast.

Additionally or alternatively, the antimicrobial composition can be effective against at least one strain of algae which is selected from the group comprising *Chlorella vulgaris*, *Chlorella emersonii, Stichococcus bacillaris*, *Pleurococcus sp., Anacystis montana*, and mixtures thereof.

The term "at least one strain of algae" in the meaning of the present invention means that the strain of algae comprises, preferably consists of, one or more strains of algae.

In one embodiment of the present invention, the at least one strain of algae comprises, preferably consists of, one strain of algae. Alternatively, the at least one strain of algae comprises, preferably consists of, two or more strains of algae. For example, the at least one strain of algae comprises, preferably consists of, two or three strains of algae. Preferably, the at least one strain of algae comprises, preferably consists of, two or more strains of algae.

Surprisingly, it has been found that the present antimicrobial composition is effective against microorganisms without the use of conventional biocides and thus can be used as such as antimicrobial composition.

Thus, the antimicrobial composition is preferably free of a biocide selected from the group comprising phenols, halogenated phenols, halogen-containing compounds, halogen-releasing compounds, isothiazolinones, aldehyde-containing compounds, aldehyde-releasing compounds, guanidines, sulfones, thiocyanates, pyrithiones, antibiotics such as β-lactam antibiotics, quaternary ammonium salts, peroxides, perchlorates, amides, amines, heavy metals (other than zinc ions), biocidal enzymes, biocidal polypeptides, azoles, carbamates, glyphosates, sulphonamides and mixtures thereof.

The phenol biocide may be 2-phenylphenol (OPP) (CAS NO 90-43-7) and/or 2-phenylphenol (OPP) in the form of the alkali metal salt such as the sodium salt (CAS NO 132-27-4) or potassium salt (CAS NO 13707-65-8).

The halogenated phenol biocide may be 4-chloro-3-methylphenol (CAS NO 59-50-7) and/or 4-chloro-2-methylphenol (CAS NO 1570-64-5).

The biocide being a halogen-containing or halogen-releasing compound may be selected from bronopol (CAS NO 52-51-7), bronidox (CAS NO 30007-47-7), 2,2-dibrom-3-nitrilpropionamid (DBNPA) (CAS NO 10222-01-2), 1,2-dibromo-2,4-dicyanobutane (CAS NO 35691-65-7), monochloroamine (CAS NO 10599-90-3), ammonium bromide (
CAS NO 12124-97-9), calcium hypochlorite (CAS NO 7778-54-3), iodine (CAS NO 7553-56-2), tri-iodide (CAS NO 14900-04-0), potassium iodate (CAS NO 7758-05-6) and mixtures thereof.

In accordance with the present invention, a "halogen-containing compound" refers to a biocide which has one or more halogen-groups. In accordance with the present invention, a "halogen-releasing compound" refers to a compound which is able to release or transfer a halogen group.

The isothiazolinone biocide may be selected from the group comprising isothiazolinone (IT) (CAS NO 1003-07-2), benzisothiazolinone (BIT) (CAS NO 2634-33-5), 5-chloro-2-methyl-2H-isothiazolin-3-one (CMIT) (CAS NO 26172-55-4), 2-methyl-2H-isothiazolin-3-one (MIT) (CAS NO 2682-20-4), octylisothiazolinone (OIT) (CAS NO 26530-20-1), dichlorooctylisothiazolinone (DOIT) (CAS NO 64359-81-5) and mixtures thereof. For example, the isothiazolinone biocide CMIT/MIT (CAS NO 55965-84-9) is a mixture of 5-chloro-2-methyl-2H-isothiazolin-3-one (CMIT) and 2-methyl-2H-isothiazolin-3-one (MIT) at a weight ratio of 3: 1.

The aldehyde-containing compound may be selected from the group comprising formaldehyde (CAS NO 50-00-0), acetaldehyde, glyoxal, glutaraldehyde (CAS NO 111-30-8), 2-propenal, phthalic dialdehyde and mixtures thereof, and preferably is formaldehyde, glutaraldehyde or mixtures thereof.

In accordance with the present invention, an "aldehyde-containing compound" refers to a biocide which has one or more aldehyde-group(s).

The aldehyde-releasing compound may be selected from the group comprising formaldehyde-releasing compounds, acetaldehyde-releasing compounds, succinaldehyde-releasing compounds, 2-propenal-releasing compounds and mixtures thereof, preferably from formaldehyde-releasing compounds. The formaldehyde-releasing compound may be selected from the group comprising benzyl alcoholmono(poly)-hemiformal (CAS NO 14548-60-8), tetramethylol-acetylenediurea (CAS NO 5395-50-6), thiadiazinethione-tetrahydrodimethyl (DAZOMET) (CAS NO 533-74-4), (ethylenedioxy)dimethanol (EDDM) (CAS NO 3586-55-8), 2-chloro-N- (hydroxymethyl)acetamide (CAS NO 2832-19-1), dimethyloxazolidine (DMO) (CAS NO 51200-87-4), hexamethylenetetramine (CAS NO 100-97-0), bis[tetrakis(hydroxymethyl)phosphonium] sulphate (THPS) (CAS NO 55566-30-8), 1-(cis-3-chloroallyl)-3,5,7-triaza-1-azoniaadamantane chloride (CAS NO 51229-78-8), hexahydro-1,3,5-tris(hydroxyethyl)-s-triazine (CAS NO 4719-04-4) and mixtures thereof.

In accordance with the present invention, an "aldehyde-releasing compound" refers to a compound which is able to release mono- di-, and/or tri-aldehyde.

The guanidines may be selected from guanidinedodecyl monochloride (CAS NO 13590-97-1) and/or polyethoxyethoxyethylguanidinium hexachloride (CAS NO 374572-91-5). The sulfone biocide may be hexachlorodimethyl sulfone (CAS NO 3064-70-8) and/or 4,4'-Diaminodiphenylsulfone (CAS NO 80-08-0). The thiocyanate biocide may be methylene bis(thiocyanate) (CAS NO 6317-18-6) and/or (Benzothiazol-2-ylthio)methylthiocyanate (CAS NO 21564-17-0). The biocide being an antibiotic may be selected from β-lactam antibiotics such as penicillin G (CAS NO 69-57-8) and/or ampicillin (CAS NO 69-53-4) and/or biapenem (CAS NO 120410-24-4) and/or cefixime (CAS NO 79350-37-1). The amide biocide may be 2,2-dibromo-3-nitrilopropionamide (DBNPA) (CAS NO 10222-01-2). The azole biocide may be selected from climbazole (CAS NO 38083-17-9), miconazole (CAS NO 22916-47-8), clotrimazole (CAS NO 23593-75-1), and mixtures thereof including the bioicdes in the form of a salt such as miconazole nitrate (CAS NO 22832-87-7). The carbamate biocide may be selected from iodopropynyl butylcarbamate (CAS NO 55406-53-6), aldicarb (CAS NO 116-06-3), carbofuran (CAS NO 1563-66-2) and mixtures thereof. The glyphosate biocide may be selected from N-(phosphonomethyl)glycine (CAS NO 1071-83-6) and/or N-(phosphonomethyl)glycine in the form of the salt such as the ammonium salt or isopropylammonium salt (CAS NO 40465-66-5 and CAS NO 38641-94-0). The pyrithione biocide may be sodium pyrithione (CAS NO 3811-73-2) and/or zinc pyrithione (CAS NO 13463-41-7).

The biocide can be further selected from quaternary ammonium salts, peroxides, perchlorates, tributyl tin, heavy metals (other than zinc ions), biocidal enzymes, biocidal polypeptides, sulphonamides and mixtures thereof.

In one embodiment, the antimicrobial composition is free of biocides.

However, it is to be noted that it is not excluded that the antimicrobial composition further comprises minor amounts of a biocide in order to increase the antimicrobial efficiency of the antimicrobial composition against microorganisms.

Preferably, the antimicrobial composition has a pH value of from 2 to 12, preferably from 6 to 12 and more preferably from 7 to 10.5.

In one embodiment, it is preferred that the antimicrobial composition is an alkaline stable antimicrobial composition. That is to say the antimicrobial composition is preferably stable under alkaline conditions such as a pH of above 8, preferably of above 9 and most preferably of above 10.

For example, the antimicrobial composition is effective against microorganisms such as at least one strain of bacteria, at least one strain of fungi, mold, yeast, algae and mixtures thereof, when present in an aqueous preparation at a pH from 8 to 8.5, and/or a pH from 8.5 to 9, and/or a pH from 8.5 to 9.5, and/or a pH from 9.5 to 10 and/or a pH from 10 to 10.5.

### Aqueous preparation

The antimicrobial composition is preferably used to preserve an aqueous preparation against microorganisms. Thus, the aqueous preparation can be any kind of aqueous preparation in need of preservation against microorganisms.

More precisely, the aqueous preparation comprises the antimicrobial composition.

With regard to the definition of the antimicrobial composition and preferred embodiments thereof, reference is made to the statements provided above when discussing the technical details of the antimicrobial composition of the present invention.

The aqueous preparation is preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation.

The aqueous preparation preferably comprises at least one inorganic particulate material.

The term "at least one" inorganic particulate material in the meaning of the present invention means that the inorganic particulate material comprises, preferably consists of, one or more inorganic particulate materials.

In one embodiment of the present invention, the at least one inorganic particulate material comprises, preferably consists of, one inorganic particulate material. Alternatively, the at least one inorganic particulate material comprises, preferably consists of, two or more inorganic particulate materials. For example, the at least one inorganic particulate material comprises, preferably consists of, two or three inorganic particulate material. Preferably, the at least one inorganic particulate material comprises, preferably consists of, one inorganic particulate material.

For example, the at least one inorganic particulate material is selected from the group comprising natural ground calcium carbonate, natural and/or synthetic precipitated calcium carbonate, surface-modified calcium carbonate, dolomite, kaolin, clay, barrite, talcum, aluminium hydroxide, aluminium silicate, titanium dioxide, hydromagnesite, perlite, sepiolite, brucite and mixtures thereof.

In one embodiment of the present invention, the at least one inorganic particulate material comprises natural ground calcium carbonate and/or synthetic precipitated calcium carbonate and/or surface-modified calcium carbonate. Preferably, the at least one inorganic particulate material comprises natural ground calcium carbonate and/or synthetic precipitated calcium carbonate.

"Ground calcium carbonate" (GCC) in the meaning of the present invention is a calcium carbonate obtained from natural sources, such as limestone, marble or chalk, and processed through a treatment such as grinding, screening and/or fractionizing by wet and/or dry, for example by a cyclone or classifier.

"Precipitated calcium carbonate" (PCC) in the meaning of the present invention is a synthesized material, generally obtained by precipitation following reaction of carbon dioxide and lime in an aqueous environment or by precipitation of a calcium and carbonate ion source in water.

A "surface-modified calcium carbonate" may feature surface-reacted GCC or PCC. A surface-reacted calcium carbonate may be prepared by providing a GCC or PCC in form of an aqueous suspension, and adding an acid to said suspension. Suitable acids are, for example, sulphuric acid, hydrochloric acid, phosphoric acid, citric acid, oxalic acid, or a mixture thereof. In a next step, the calcium carbonate is treated with gaseous carbon dioxide. If a strong acid such as sulphuric acid or hydrochloric acid is used for the acid treatment step, the carbon dioxide will form automatically *in situ.* Alternatively or additionally, the carbon dioxide can be supplied from an external source. Surface-reacted calcium carbonates are described, for example, in US 2012/0031576 A1, WO 2009/074492 A1, EP 2 264 109 A1, EP 2 070 991 A1, EP 2 264 108 A1, WO 00/39222 A1, WO 2004/083316 A1 or WO 2005/121257 A2.

The natural ground calcium carbonate and/or synthetic precipitated calcium carbonate and/or surface-modified calcium carbonate may additionally be surface treated or may comprise a dispersing agent well known to the skilled person. For example, the dispersing agent may be an acrylate-based dispersing agent.

If the aqueous preparation comprises at least one inorganic particulate material, the at least one inorganic particulate material may have a particle size distribution as conventionally employed for the material(s) involved in the type of product to be produced. In general, 90 % of the particles will have an esd (equivalent spherical diameter as measured by the well-known technique of sedimentation using Sedigraph 5100 series, Micromeritics) of less than 5 µm. Coarse inorganic particulate materials may have a particle esd generally (i.e., at least 90 wt.-%) in the range of 1 to 5 µm. Fine inorganic particulate materials may have a particle esd generally less than 2 µm, e.g. 50.0 to 99.0 wt.-% less than 2 µm and preferably 60.0 to 90.0 wt.-% less than 2 µm. It is preferred that the at least one inorganic particulate material in the aqueous preparation has a weight median particle size *d*₅₀ value of from 0.1 to 5 µm, preferably from 0.2 to 2 µm and most preferably from 0.35 to 1 µm, for example 0.7 µm as measured using a Sedigraph™ 5100 of Micromeritics Instrument Corporation.

For keeping such inorganic particulate materials dispersed in an aqueous preparation and thus ensuring that the viscosity of the preparation remains substantially the same over time, additives such as dispersing agents can be used. A suitable dispersing agent according to the present invention is preferably a homo or copolymer made of monomers and/or co-monomers selected from the group consisting of acrylic acid, methacrylic acid, itaconic acid, crotonic acid, fumaric acid, maleic anhydride acid, isocrotonic acid, aconitic acid (cis or trans), mesaconic acid, sinapinic acid, undecylenic acid, angelic acid, canellic acid, hydroxyacrylic acid, acrolein, acrylamide, acrylonitrile, dimethylaminoethyl methacrylate, vinylpyrrolidone, styrene, the esters of acrylic and methacrylic acids and mixtures thereof, wherein salts of poly(acrylic acid) and/or poly (methacrylic acid) are preferred as dispersing agent.

Additionally or alternatively, the aqueous preparation comprises at least one organic particulate material. For example, the at least one organic material is selected from the group comprising carbohydrates such as CMC or starch, sugar, cellulose, modified cellulose and cellulose based pulp, glycerol, hydrocarbons and mixtures thereof.

In one embodiment of the present invention, the aqueous preparation comprises at least one inorganic particulate material, preferably being selected from the group comprising natural ground calcium carbonate, natural and/or synthetic precipitated calcium carbonate, surface-modified calcium carbonate, dolomite, kaolin, clay, barrite, talcum, aluminium hydroxide, aluminium silicate, titanium dioxide, hydromagnesite, perlite, sepiolite, brucite and mixtures thereof, and most preferably the at least one inorganic particulate material comprises natural ground calcium carbonate and/or synthetic precipitated calcium carbonate.

Thus, the aqueous preparation is preferably an aqueous suspension (or slurry).

It is appreciated that the solids content of the aqueous preparation can be up to 85.0 wt.-%. For example, the solids content of the aqueous preparation is from 10.0 to 82.0 wt.-%, and more preferably from 20.0 to 80.0 wt.-%, based on the total weight of the aqueous preparation.

The total solids content in the meaning of the present application corresponds to the residual weight of the aqueous preparation after drying for 3 h at 105°C as measured in a sample of at least 3 to 5 g.

The pH of the aqueous preparation can vary in a broad range and is preferably in a pH range typically observed for such aqueous preparations. It is thus appreciated that the aqueous preparation preferably has a pH value of from 2 to 12. For example, the aqueous preparation of step a) has a pH value of from 6 to 11.5 and more preferably from 7 to 10.5.

Typically, the aqueous preparation has a viscosity being preferably in the range from 50 to 2 000 mPa·s and preferably from 80 to 800 mPa·s, as measured with a Brookfield DV-II Viscometer at a speed of 100 rpm and equipped with a LV-3 spindle.

The aqueous preparations according to the invention can be produced by methods known in the art, by for example, dispersing, suspending or slurring water-insoluble solids, preferably inorganic particulate materials with, if appropriate, addition of a dispersing agent and, if appropriate, further additives in water.

### Process for preserving an aqueous preparation against microorganisms and uses

The present invention also refers to a process for preserving an aqueous preparation against microorganisms, said process comprises the steps of
a) providing an aqueous preparation, preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation,
b) providing an antimicrobial composition as defined herein, and
c) contacting and mixing the aqueous preparation of step a) one or more times with the antimicrobial composition of step b) for obtaining the preserved aqueous preparation.

With regard to the definition of the aqueous preparation, the antimicrobial composition, the microorganisms and preferred embodiments thereof, reference is made to the statements provided above when discussing the technical details of the aqueous preparation and the antimicrobial composition of the present invention.

According to step c) of the process of the present invention, the aqueous preparation of step a) is contacted and mixed with the antimicrobial composition of step b).

It is thus appreciated that the antimicrobial composition is preferably effective against microorganisms such as at least one strain of bacteria, at least one strain of fungi, mold, yeast, algae and mixtures thereof in the aqueous preparation when the antimicrobial composition is present. This either prevents the microbial growth of microorganisms such as at least one strain of bacteria, at least one strain of fungi, mold, yeast, algae and mixtures thereof or leads to a reduction of the cfu value (colony forming unit) in the preserved aqueous preparation.

In general, the aqueous preparation of step a) and the at least one antimicrobial composition of step b) can be brought into contact by any conventional means known to the skilled person.

It is appreciated that step c) is preferably carried out by adding the antimicrobial composition of step b) to the aqueous preparation of step a).

Preferably, the step c) is carried out in that the antimicrobial composition is added to the aqueous preparation under mixing. A sufficient mixing may be achieved by shaking the aqueous preparation or by agitation, which may provide a more thorough mixing. In one embodiment of the present invention, step c) is carried out under agitation to ensure a thorough mixing of the aqueous preparation and the antimicrobial composition. Such agitation can be carried out continuously or discontinuously.

In one embodiment, step c) is carried out in that the antimicrobial composition is added to the aqueous preparation in an amount such that the amount of each of the at least one water soluble or water dispersable source of zinc ions, the at least one water soluble or water dispersable source of lithium ions and the optional at least one water soluble or water dispersable source of magnesium ions and/or the at least one water soluble or water dispersable source of sodium ions in the aqueous preparation is at least 100 ppm, e.g. from 100 to 27 000 ppm, preferably of at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

It is appreciated that the amount of each of the at least one water soluble or water dispersable source of zinc ions and the at least one water soluble or water dispersable source of lithium ions and the optional at least one water soluble or water dispersable source of magnesium ions and/or the at least one water soluble or water dispersable source of sodium ions can vary in a great range in the aqueous preparation.

It is to be noted that the aforementioned figures reflect the amount of the antimicrobial composition being added via the at least one water soluble or water dispersable source of zinc ions, the at least one water soluble or water dispersable source of lithium ions and the optional at least one water soluble or water dispersable source of magnesium ions and/or the at least one water soluble or water dispersable source of sodium ions to the aqueous preparation and do not cover any dissolved zinc, lithium, magnesium and sodium ions which may naturally be present in the aqueous preparation.

It is appreciated that the single components of the antimicrobial composition can be added to the aqueous preparation as a pre-mixed composition or in form of the single components.

In one embodiment, the single components of the antimicrobial composition can be added to the aqueous preparation in dry form or in form of a solution or slurry or dispersion.

The amount of the at least one water soluble or water dispersable source of zinc ions, the at least one water soluble or water dispersable source of lithium ions and the optional at least one water soluble or water dispersable source of magnesium ions and/or the at least one water soluble or water dispersable source of sodium ions added to the aqueous preparation can be individually adjusted depending on the aqueous preparation. In particular, the amount of the antimicrobial composition and the single components therein depends on the nature and the occurrence of the at least one water soluble or water dispersable source of zinc ions, the at least one water soluble or water dispersable source of lithium ions and/the optional at least one water soluble or water dispersable source of magnesium ions and/or the at least one water soluble or water dispersable source of sodium ions to be used in the aqueous preparation. The optimum amount to be employed within the defined ranges can be determined by preliminary tests and test series on a laboratory scale and by supplementary operational tests.

It is appreciated that step c) can be repeated one or more times.

The antimicrobial composition can be added in one or several portions to the aqueous preparation. If the antimicrobial composition is added in several portions, the antimicrobial composition can be added in about equal portions or unequal portions to the aqueous preparation.

The aqueous preparation obtained in step c) preferably has solids content corresponding to the solids content of the aqueous preparation provided in step a). It is thus appreciated that the aqueous preparation obtained in step c) preferably has solids content of up to 85.0 wt.-%, based on the total weight of the aqueous preparation obtained in step c). For example, the solids content of the aqueous preparation obtained in step c) is from 10.0 to 82.0 wt.-%, and more preferably from 20.0 to 80.0 wt.-%, based on the total weight of the aqueous preparation obtained in step c).

Additionally or alternatively, the pH of the aqueous preparation obtained in step c) preferably corresponds to the pH of the aqueous preparation provided in step a). Thus, the aqueous preparation obtained in step c) preferably has a pH value of from 2 to 12. For example, the aqueous preparation obtained in step d) has a pH value of from 6 to 11.5 and more preferably from 7 to 10.5.

Typically, the aqueous preparation obtained in step c) has a viscosity being preferably in the range from 50 to 2 000 mPa·s and preferably from 80 to 800 mPa·s, as measured with a Brookfield DV-II Viscometer at a speed of 100 rpm and equipped with a LV-3 spindle.

The aqueous preparation is preferably obtainable by the process of the instant invention, i.e. the process for preserving an aqueous preparation against microorganisms as defined above.

A further aspect of the present thus refers to an aqueous preparation, preferably a preserved aqueous preparation, obtainable by a process for preserving an aqueous preparation against microorganisms as defined herein.

In view of the goods results obtained, the present invention refers in a further aspect to the use of an antimicrobial composition as defined herein for preserving an aqueous preparation against microorganisms.

It is preferred that the microorganisms are selected from the group comprising at least one strain of bacteria, at least one strain of fungi, mold, yeast, algae and mixtures thereof.

The aqueous preparation is preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation.

With regard to the definition of the aqueous preparation, the antimicrobial composition, the microorganisms and preferred embodiments thereof, reference is made to the statements provided above when discussing the technical details of the aqueous preparation and the antimicrobial composition of the present invention.

The following examples are meant to illustrate the invention without restricting its scope.

### Examples

### Measurement Methods

The following measurement methods are used to evaluate the parameters given in the description, examples and claims.

### BET specific surface area of a material

The BET specific surface area was measured via the BET process according to ISO 9277 using nitrogen.

### Particle size distribution (mass % particles with a diameter < X) and weight median diameter (d₅₀) of a particulate material

Weight median grain diameter and grain diameter mass distribution of a particulate material were determined via the sedimentation process, i.e. an analysis of sedimentation behaviour in a gravitational field. The measurement was made with a Sedigraph™ 5100 of Micromeritics Instrument Corporation.

The method and the instrument are known to the skilled person and are commonly used to determine grain size of fillers and pigments. The measurement is carried out in an aqueous solution of 0.1 wt.-% Na₄P₂O₇. The samples are dispersed using a high speed stirrer and supersonics.

### pH measurement

The pH of the water samples is measured by using a standard pH-meter at approximately 25°C.

### Brookfield-viscosity

All Brookfield-viscosities are measured with a Brookfield DV-II Viscometer equipped with a LV-3 spindle at a speed of 100 rpm and room temperature (20 ± 3 °C).

### Amount of additives

Unless otherwise stated, all amounts quoted in ppm represent mg values per kilogram of water in the aqueous preparation. Concentrations are further quoted in mmol/kg (millimol per kilogram) or mol/l (mol per litre) according to the International System of Units in the water of the aqueous preparation.

### Bacterial count

All quoted bacterial counts in the Tables here below are either cfu/ml (colony forming units per millilitre) or cfu/plate (colony forming units per plate) wherein cfu/ml were determined after 2-3 days following plate-out and in accordance with counting method described in "Bestimmung von aeroben mesophilen Keimen", Schweizerisches Lebensmittelbuch, chapter 56, section 7.01, edition of 1985, revised version of 1988. Unless otherwise stated, per tryptic soy agar plate (TSA, prepared using BD 236950) 0.1ml of a 1:10 dilution in phosphate buffered saline (PBS; pH= 7.4, 137 mmol/l NaCl, 2.7 mmol/l KCI, 10 mmol/l Na₂HPO₄, 1.8 mmol/l KH₂PO₄) was plated. TSA plates were then incubated for 48 h or 72 h at 30°C. Colony forming units (cfu) were then counted and reported as cfu/plate. Counts from of 100 000 cfu/ml and above are reported as 100 000 cfu/ml.

### Solids content

The solids content is measured using a Moisture Analyzer of Mettler-Toledo MJ33. The method and the instrument are known to the skilled person.

### Amounts of sodium and lithium

All sodium and lithium amounts quoted in ppm correspond to mg values per kilogram of the final product.

### Preparation of bacteria, yeast and mould used

Fresh bacteria cultures of the bacteria *Pseudomonas* sp., e.g. *P. aeruginosa* DSM-1707 and *P. putida* DSM-50906, *P. pseudoalcaligenes* DSM- 50188T, *Burkholderia cepacia,* e.g. *B. cepacia* ATCC-21809, *Alcaligenes faecalis,* e.g. *A. faecalis* ATCC-25094, Escherichia *coli* DSM - 1576, and *Staphylococcus aureus,* e.g. *S.aureus* strains DSM 346, and fresh Yeast cultures of Saccharomyces *cervisiae* DSM-1333; Pichia membranifaciens DSM-70179, and Rhodotorula *mucilaginosa* DSM-18184, were prepared by inoculation of 3 ml liquid growth media (tryptic soy broth, e.g. Fluka, No. 22092) from a single colony of a stock culture and incubation for 16 to 20 h at 30°C with agitation at 150 rotations per minutes (rpm) leading to a cell density of approximately 1 × 10⁹ cells/ml. Over-night cultures of bacteria/yeast and fungi (in tryptic soy broth) were mixed together in equal quantities, 100 µl of the obtained mixture was added to 50 ml of base paint (see below).

### Base Paint

The base paint formulation for testing antimicrobial activity is summarized in the following table 1.

**Table 1:**

| Emulsion Paint | wt.-% | [kg] |
|---|---|---|
| Tap water | 32.4 | 324.0 |
| Wetting and dispersing agent^{#1} | 0.1 | 1.0 |
| Rheology modifier^{#2} | 0.5 | 5.0 |
| Sodium hydroxide, 10% | 0.1 | 1.0 |
| Defoamer^{#3} | 0.3 | 3.0 |
| Wetting and dispersing agent^{#4} | 0.3 | 3.0 |
| Rheology modifier^{#5} | 0.4 | 4.0 |
| White pigment^{#6} | 6.0 | 60.0 |
| Extender^{#7} | 13.0 | 130.0 |
| Extended^{#8} | 23.0 | 230.0 |
| Matting agent^{#9} | 7.0 | 70.0 |
| Extender^{#10} | 5.0 | 50.0 |
| Binder^{#11} | 11.5 | 115.0 |
| Defoamer^{#12} | 0.4 | 4.0 |
| Total | 100 | 1000.0 |

| | | |
|---|---|---|
| ^{#1} The wetting and dispersing agent relates to a sodium polyphosphate which is commercially available as Calgon N new from BK Giulini Chemie. ^{#2} The rheology modifier relates to a methyl ethyl hydroxyethyl cellulose which is commercially available as Bermocoll Prime 3500 from AkzoNobel Corp.. ^{#3} The defoamer relates to a mineral oil based defoamer which is commercially available as BYK 038 from Byk Chemie. ^{#4} The wetting and dispersing agent relates to a sodium salt of acrylic polymer which is commercially available as ECODIS P 50 from Coatex SA. ^{#5} The rheology modifier relates to a polyurethane which is commercially available as Coapur 2025 from Coatex SA. ^{#6} The white pigment relates to a titanium dioxide, which is commercially available as Tiona 595 from Millenium Inorganic chemicals. ^{#7} The extender relates to a dry ground calcium carbonate (marble from Italy) having a median diameter (*d*₅₀) of 0.8 µm and a top cut (d₉₈) of 5 µm which is commercially available as Omyacarb Extra - CL from Omya International AG. ^{#8} The extender relates to a dry ground calcium carbonate (marble from Italy) having a median diameter (*d*₅₀) of 4.5-6.5 µm, a sieve residue >100 µm of ≤ 30 ppm, and sieve residue > 45µm of ≤ 0.1 % (ISO 787/7), which is commercially available as Omyacarb 5 - GU from Omya International AG. ^{#9} The matting agent relates to a dry ground calcium carbonate (marble from Italy) having a median diameter (*d*₅₀) of 20 µm, a sieve residue > 60 µm of ≤ 0.8 % and a sieve residue > 45 µm of ≤ 2% (ISO 787/7), which is commercially available as Omya Calcimatt AV from Omya International AG. ^{#10} The extender relates to a dry ground calcium carbonate (marble from Italy) having a median diameter (*d*₅₀) of 6 µm and a top cut (*d*₉₈) of 19 µm, which is commercially available as FINNTALC M20SL-AW from Mondo Minerals. ^{#11} The binder relates to a non-plasticized aqueous polymer dispersion based on styrene and an acrylic acid ester (53 % dispersion) which is commercially available as Mowilith LDM 1871 53% from Clariant. ^{#12} The defoamer relates to a polymer based, VOC- and silicone free based defoamer which is commercially available as BYK 012 from Byk Chemie. | | |

### Antimicrobial activity tests in Base Paint

Samples of the base paint formulation were mixed with different amounts of ZnO, MgCO₃, Li₂CO₃ and/or Na₂CO₃ as set out in Table 2.

**Table 2:**

| Base paint samples | ZnO [ppm] (Zn⁺ [ppm])^{*} | Li₂CO₃ [ppm] (Li⁺ [ppm])^{*} | MgCO₃ [ppm] (Mg²⁺ [ppm])^{*} | Na₂CO₃ [ppm] (Na⁺ [ppm])^{*} |
|---|---|---|---|---|
| Control | 0 | 0 | 0 | 0 |
| E1 (IE) | 100 (803) | 1000 (188) | 100 (288) | 0 |
| E2 (IE) | 1500 (1204) | 150 (282) | 0 | 0 |
| E3 (IE) | 100 (803) | 1000 (188) | 0 | 0 |
| E4 (CE) | 100 (803) | 0 | 100 (288) | 0 |
| E5 (CE) | 0 | 1000 (188) | 100 (288) | 0 |
| E6 (IE) | 1250 (1004) | 1250 (235) | 500 (144) | 0 |
| E7 (IE) | 100 (803) | 1000 (188) | 0 | 1000 (434) |
| E8 (IE) | 1500 (1204) | 150 (282) | 0 | 1500 (651) |
| E9 (IE) | 1500 (1204) | 1000 (188) | 0 | 0 |

| | | | | |
|---|---|---|---|---|
| *: amount refers to the amount of the corresponding ion relative to the weight of water in the base paint. | | | | |

Base paint formulations E1-E9 comprising the antimicrobial compositions according to Table 2 were prepared, and aliquots of 50 ml of the base paint formulation were mixed with an aliquot of 800 µl (Mix-all), well mixed and incubated at room temperature for one week in the dark. After one week, 100 µl of a 1:10 dilution of a PBS-buffer (Phosphate buffer saline 10 mM, pH 7.4, 137 mmol/l NaCl, 2.7 mmol/l KCI, 10 mmol/l Na₂HPO₄, 1.8 mmol/l KH₂PO₄) were plated out (100 colony forming units (cfu) per millilitre of paint) on standard TSA (Trypticase soy agar) plates, and incubated at 30°C in a Binder 3.1 incubator. Samples were analysed after 48 h for growth of bacteria and after 72 h for growth of yeast/fungi/mould.

### Bacteria/yeast and mould counts of antimicrobial activity tests of treated base paint

When not otherwise indicated, the quoted bacterial/yeast and fungi counts are given as cfu/plate. In Table 3 hereto below the antimicrobial activity of the base paint formulations prepared according to table 2 are shown. The antimicrobial activity was weekly tested over a period of 10 weeks (w0 to w10), according to the microbial activity test in base paint mentioned above. Which means that aliquots of the base paint formulations were taken over the 10 weeks and weekly tested with fresh bacteria/yeast and mould mixture mentioned above to evaluate the longterm effect of the antimicrobial activity of the added antimicrobial compositions in a base paint formulation.

**Table 3:**

| | **W0** | **W1** | **W2** | **W3** | **W4** | **W5** | **W6** | **W7** | **W8** | **W9** | **W10** |
|---|---|---|---|---|---|---|---|---|---|---|---|
| **E1** | 100 | 100 | 100 | 100 | 100 | 100000 | 100000 | 100000 | 100000 | 100000 | 100000 |
| **E2** | 100 | 100 | 100 | 100 | 100 | 100 | 100 | 100 | 100 | 100 | 100 |
| **E3** | 100 | 100 | 500 | 100000 | 100000 | 100000 | 100000 | 100000 | 100000 | 100000 | 100000 |
| **E4** | 100 | 29700 | 100000 | 100000 | 100000 | 100000 | 100000 | 100000 | 100000 | 100000 | 100000 |
| **E5** | 100 | 41500 | 100000 | 100000 | 100000 | 100000 | 100000 | 100000 | 100000 | 100000 | 100000 |
| **E6** | 100 | 4000 | 100 | 100 | 100 | 100 | 100 | 23500 | 100000 | 100000 | 100000 |
| **E7** | 100 | 100 | 100 | 100 | 100 | 100 | 100 | 100 | 100 | 200 | 100 |
| **E8** | 100 | 100 | 100 | 100 | 100 | 100 | 100 | 100 | 100 | 100 | 100 |
| **E9** | 100 | 100 | 100 | 100 | 100 | 100 | 100 | 100 | 100 | 100 | 100 |

From the data of Table 3, it can be gathered that a composition comprising at least one water soluble or water dispersable source of zinc ions in combination with at least one water soluble or water dispersable source of lithium ions (E3) shows antimicrobial efficiency for at least two weeks, while a composition missing the at least one water soluble or water dispersable source of zinc ions (E5) or the at least one water soluble or water dispersable source of lithium ions (E4) shows no antimicrobial efficiency. It can be further gathered that the antimicrobial efficiency of the composition can be further improved if the composition further comprises at least one water soluble or water dispersable source of magnesium ions and/or at least one water soluble or water dispersable source of sodium ions.

## Claims

1. Antimicrobial composition comprising at least one water soluble or water dispersable source of zinc ions in combination with at least one water soluble or water dispersable source of lithium ions and optionally at least one water soluble or water dispersable source of magnesium ions and/or at least one water soluble or water dispersable source of sodium ions.

2. The antimicrobial composition according to claim 1, wherein the antimicrobial composition comprises water, preferably each of the at least one water soluble or water dispersable source of zinc ions and the at least one water soluble or water dispersable source of lithium ions and the optional at least one water soluble or water dispersable source of magnesium ions and/or the at least one water soluble or water dispersable source of sodium ions are present in the composition in an amount of at least 100 ppm, e.g. from 100 to 27 000 ppm, preferably at least 250 ppm, e.g. from 250 to 25 000 ppm, more preferably at least 500 ppm, e.g. from 500 to 20 000 ppm, still more preferably at least 600 ppm, e.g. from 600 to 15 000 ppm, even more preferably at least 750 ppm, e.g. from 750 to 10 000 ppm, and most preferably from 750 to 5 000 ppm, calculated relative to the weight of water.

3. The antimicrobial composition according to claim 1 or 2, wherein the at least one water soluble or water dispersable source of lithium ions is at least one lithium salt, preferably the at least one lithium salt is selected from lithium carbonate, lithium chloride, lithium hydroxide, lithium phosphate, lithium citrate, lithium maleate, lithium acetate and lithium lactate; polymeric salts of lithium and mixtures thereof, said polymeric salt of lithium is preferably selected from lithium salts of acrylic homopolymers, acrylic copolymers such as copolymers of acrylic acid and maleic acid and/or acrylamide, polyphosphates and mixtures thereof, said polymeric salt of lithium is more preferably Li₂Na₂polyphosphate, lithium-sodium hexamethaphosphate or lithium polyacrylate.

4. The antimicrobial composition according to any one of claims 1 to 3, wherein the at least one water soluble or water dispersable source of magnesium ions is at least one magnesium salt, preferably the at least one magnesium salt is selected from magnesium carbonate, magnesium chloride, magnesium oxide, magnesium hydroxide, magnesium phosphate, magnesium citrate, magnesium maleate, magnesium acetate and magnesium lactate; polymeric salts of magnesium and mixtures thereof, said polymeric salt of magnesium is preferably selected from magnesium salts of acrylic homopolymers, acrylic copolymers such as copolymers of acrylic acid and maleic acid and/or acrylamide, polyphosphates and mixtures thereof.

5. The antimicrobial composition according to any one of claims 1 to 4, wherein the at least one water soluble or water dispersable source of zinc ions is at least one zinc salt, preferably the at least one zinc salt is selected from zinc carbonate, zinc oxide, zinc chloride, zinc hydroxide, zinc phosphate, zinc citrate, zinc maleate, zinc acetate and zinc lactate; polymeric salts of zinc and mixtures thereof, said polymeric salt of zinc is preferably selected from zinc salts of acrylic homopolymers, acrylic copolymers such as copolymers of acrylic acid and maleic acid and/or acrylamide, polyphosphates and mixtures thereof.

6. The antimicrobial composition according to any one of claims 1 to 5, wherein the at least one water soluble or water dispersable source of sodium ions is at least one sodium salt, preferably the at least one sodium salt is selected from sodium carbonate, sodium chloride, sodium hydroxide, sodium phosphate, sodium citrate, sodium maleate, sodium acetate and sodium lactate; polymeric salts of sodium and mixtures thereof, said polymeric salt of sodium is preferably selected from sodium salts of acrylic homopolymers, acrylic copolymers such as copolymers of acrylic acid and maleic acid and/or acrylamide, polyphosphates and mixtures thereof.

7. The antimicrobial composition according to any one of claims 1 to 6, wherein the weight ratio of the at least one water soluble or water dispersable source of zinc ions to the at least one water soluble or water dispersable source of lithium ions [Zn/Li] is from 100:1 to 1:100, preferably from 10:1 to 1:10 and most preferably from 3:1 to 1:3, and/or the weight ratio of the at least one water soluble or water dispersable source of magnesium ions to the at least one water soluble or water dispersable source of zinc ions [Mg/Zn] is from 100:1 to 1:100, preferably from 10:1 to 1:10 and most preferably from 3:1 to 1:3, and/or the weight ratio of the at least one water soluble or water dispersable source of magnesium ions to the at least one water soluble or water dispersable source of lithium ions [Mg/Li] is from 100:1 to 1:100, preferably from 10:1 to 1:10 and most preferably from 3:1 to 1:3, and/or the weight ratio of the at least one water soluble or water dispersable source of sodium ions to the at least one water soluble or water dispersable source of zinc ions [Na/Zn] is from 100:1 to 1:100, preferably from 10:1 to 1:10 and most preferably from 3:1 to 1:3, and/or the weight ratio of the at least one water soluble or water dispersable source of sodium ions to the at least one water soluble or water dispersable source of lithium ions [Na/Li] is from 100:1 to 1:100, preferably from 10:1 to 1:10 and most preferably from 3:1 to 1:3, and/or the weight ratio of the at least one water soluble or water dispersable source of sodium ions to the at least one water soluble or water dispersable source of magnesium ions [Na/Mg] is from 100:1 to 1:100, preferably from 10:1 to 1:10 and most preferably from 3:1 to 1:3.

8. The antimicrobial composition according to any one of claims 1 to 7, wherein the antimicrobial composition is effective against microorganisms, preferably microorganisms selected from the group comprising at least one strain of bacteria, at least one strain of fungi, mold, yeast, algae and mixtures thereof.

9. The antimicrobial composition according to claim 8, wherein the at least one strain of bacteria is selected from the group comprising *Pseudomonas* sp., such as *Pseudomonas aeruginosa, Pseudomonas pseudoalcaligenes, Pseudomonas putida, Pseudomonas stutzeri, Pseudomonas mendocina, Pseudomonas oleovorans subsp. Oleovorans,* and mixtures thereof, *Burkholderia* sp., such as *Burkholderia cepacia; Escherichia* spp. such as *Escherichia coli; Alcaligenes* sp. such as *Alcaligenes faecalis; Staphylococcus* sp. such as *Staphylococcus aureus; Enterococcus* sp. such as *Enterococcus faecalis; Bacillus* sp. such as *Bacillus halodurans; Salmonella* sp.; *Legionella, Comomonas aquatica, Brevundimonas intermedia, Rhizobium radiobacter, Spingobium yanoikuyae, Caldimonas sp., Hydrogenophaga sp., Alishewanella agri, Arthrobacter sp., Chryseomicrobium amylolyticum, Microbacterium sp., Exiguobacterium aurantiacum,* and mixtures thereof and/or the at least one strain of fungi is selected from the group comprising *Saccharomyces cerevisiae, Pichia membranifaciens, Rhodotorula mucilaginosa Fusarium sp., Aspergillus* sp. such as *Aspergillus niger, Aspergillus brasiliensis,* and mixtures thereof, *Penicillium* sp. such as *Penicillium pinophilum, Penicillium funiculosum,* and mixtures thereof, *Aureobasidium pullulans, Geotrichum sp., Acremonium sp., Alternaria sp., Cladosporium sp., Mucor sp., Rhizopus sp., Stachybotrys sp., Trichoderma sp., Dematiaceae sp., Phoma sp., Europium sp., Scopulariopsis sp., Aureobasidium sp., Monilia sp., Botrytis sp., Stemphylium sp., Chaetomium sp., Mycelia sp., Neurospora sp., Ulocladium sp., Paecilomyces sp., Wallemia sp., Curvularia sp.,* and mixtures thereof.

10. The antimicrobial composition according to any one of claims 1 to 9, wherein the composition is free of a biocide selected from the group comprising phenols, halogenated phenols, halogen-containing compounds, halogen-releasing compounds, isothiazolinones, aldehyde-containing compounds, aldehyde-releasing compounds, guanidines, sulfones, thiocyanates, pyrithiones, antibiotics such as β-lactam antibiotics, quaternary ammonium salts, peroxides, perchlorates, amides, amines, heavy metals (other than zinc ions), biocidal enzymes, biocidal polypeptides, azoles, carbamates, glyphosates, sulphonamides and mixtures thereof, preferably the composition is free of biocides.

11. Aqueous preparation, preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation, comprising the antimicrobial composition according to any one of claims 1 to 10.

12. The aqueous preparation according to claim 11, wherein the aqueous preparation further comprises
(i) at least one inorganic particulate material, preferably the at least one inorganic particulate material is selected from the group comprising natural ground calcium carbonate, natural and/or synthetic precipitated calcium carbonate, surface-modified calcium carbonate, dolomite, kaolin, clay, barrite, talcum, aluminium hydroxide, aluminium silicate, titanium dioxide, hydromagnesite, perlite, sepiolite, brucite and mixtures thereof, and most preferably the at least one inorganic particulate material comprises natural ground calcium carbonate and/or synthetic precipitated calcium carbonate, and/or
(ii) at least one organic material, preferably the at least one organic material is selected from the group comprising carbohydrates such as starch, sugar, cellulose, modified cellulose and cellulose based pulp, glycerol, hydrocarbons and mixtures thereof.

13. The aqueous preparation according to claim 11 or 12, wherein the aqueous preparation has
(i) a pH value of from 2 to 12, preferably from 6 to 12 and more preferably from 7 to 10.5, and/or
(ii) a solids content of up to 85.0 wt.-%, preferably from 10.0 to 82.0 wt.-%, and more preferably from 20.0 to 80.0 wt.-%, based on the total weight of the aqueous preparation.

14. Process for preserving an aqueous preparation against microorganisms, said process comprises the steps of
a) providing an aqueous preparation, preferably a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation,
b) providing an antimicrobial composition as defined in any one of claims 1 to 10, and
c) contacting and mixing the aqueous preparation of step a) one or more times with the antimicrobial composition of step b) for obtaining the preserved aqueous preparation.

15. Use of an antimicrobial composition as defined in any one of claims 1 to 10 for preserving an aqueous preparation against microorganisms.

16. The use according to claim 15, wherein the microorganisms are selected from the group comprising at least one strain of bacteria, at least one strain of fungi, mold, yeast, algae and mixtures thereof.

17. The use according to claim 15 or 16, wherein the aqueous preparation is a paper making formulation, a paper coating formulation, fibre formulation, food formulation, pharmaceutical formulation, cosmetic formulation, plastic formulation, adhesive formulation, metal working fluid, cooling fluid, primer coat, levelling compound, and/or a paint formulation.
